# FASCICULE DE BREVET EUROPEEN

(11) **EP 2 746 830 B1**
(45) Date de publication et mention de la délivrance du brevet: **07.11.2018**
(21) Numéro de dépôt: 13192874.9
(22) Date de dépôt: 14.11.2013
(51) Int. Cl.: G02B 7/28, G02B 7/38

(54) **Mise au point optique d'un instrument de saisie d'image**
Optische Feineinstellung eines Bilderfassungsgeräts
Optical focussing of an image-capturing instrument

(30) Priorité: 14.12.2012 FR 1203419
(43) Date de publication de la demande: 25.06.2014
(73) Titulaire: Airbus Defence and Space SAS, 31402 Toulouse Cedex 4 (FR); Centre National d'Etudes Spatiales (C.N.E.S.), 75001 Paris (FR)
(72) Inventeur: Georgy, Pierre-Luc, 31500 Toulouse (FR)
(74) Mandataire: Cabinet Plasseraud

(56) Documents cités:
- EP-A2- 1 533 999
- ZHENHUA LU ET AL: "Realization of the imaging-auto-focus on the APRC using splicing-CCD", PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 8285, 2011, XP002697056, ISSN: 0277-786X

## Description

La présente invention concerne un procédé pour caractériser un défaut de mise au point optique d'un instrument de saisie d'image, l'instrument qui est adapté pour ce procédé, ainsi qu'un procédé d'assemblage de cet instrument.

La mise au point optique d'un instrument de saisie d'image consiste à faire coïncider un plan dans lequel une image est formée par une optique, avec un plan de détection d'image dans lequel est située la surface photosensible d'au moins un capteur d'image.

Dans les appareils photographiques qui sont destinés au grand public, l'optique de formation d'image est un objectif à lentilles, dont la longueur de focale peut être ajustée en déplaçant l'une au moins des lentilles. Le capteur d'image est fixe et la mise au point optique consiste à déplacer la lentille mobile de l'objectif jusqu'à ce que le plan de formation d'image devienne superposé avec la surface photosensible du capteur d'image. La mise au point optique permet alors de saisir des images nettes pour des éloignements variables des scènes qui sont photographiées. De nombreux procédés de mise au point automatique, ou «autofocus», sont connus. Dans ces procédés, plusieurs images-tests sont saisies successivement avant l'image définitive en modifiant volontairement le réglage de l'objectif. Toutes les images-tests contiennent une partie commune du champ optique de l'image définitive, qui peut être tout ou partie de ce champ optique. Une analyse des images-tests permet d'estimer de façon relative le défaut de mise au point optique qui existe pour chacune d'elles. Une estimation du réglage qui produira la mise au point est alors extrapolée, ou une approche progressive vers ce réglage est réalisée, ou encore ces deux méthodes sont combinées pour parvenir plus rapidement au réglage final de la mise au point optique. L'image définitive est alors saisie en adoptant le réglage de mise au point qui a ainsi été déterminé.

Un autre domaine d'imagerie est celui de la saisie d'image à partir de satellites ou de vaisseaux spatiaux. Dans ce cas, l'optique de formation d'image peut être un télescope, et la scène photographiée est toujours très éloignée de sorte que le plan de formation d'image est le plan focal du télescope. Mais la position du plan focal peut varier, notamment à cause de déformations thermo-élastiques qui sont subies par l'optique, d'autant plus que celle-ci peut être de grandes dimensions. Divers systèmes de mise au point optique qui sont adaptés aux conditions spatiales ainsi qu'aux dimensions importantes des composants optiques utilisés, sont alors mis en oeuvre. Toutefois, les procédés qui sont mis en oeuvre pour la photographie de grand public ne sont pas bien adaptés aux exigences de l'imagerie spatiale, pour caractériser un défaut de mise au point qui existe pour un réglage donné de l'instrument de saisie d'image. Principalement, le satellite ou vaisseau spatial à bord duquel l'instrument est embarqué, peut se déplacer rapidement par rapport à la scène qui est photographiée, si bien qu'il est difficile de saisir successivement plusieurs images-tests de la même scène, et très pénalisant en termes de productivité.

L'article intitulé "Realization of Imaging-Auto-Focus on the APRC Using Splicing-CCD", de Zhenhua Lu et al, Proc. of SPIE Vol. 8285, 82854L-1 (International Conférence on Graphie and Image Processing 2011), décrit un procédé de mise au point optique qui est spécifiquement adapté au mode de saisie d'image connu sous la désignation de "push-broom". Dans ce mode, une série d'images sont successivement saisies au fur et à mesure qu'une bande de champ optique, appelée fauchée, est balayée selon une direction longitudinale. Ce balayage de fauchée est réalisé par le défilement du satellite au dessus de la scène. Le procédé qui est décrit dans cet article utilise plusieurs capteurs d'image qui sont disposés dans deux rangées à l'intérieur d'un plan commun de saisie d'image, les deux rangées étant perpendiculaires au déplacement apparent de la scène dans ce plan. Le procédé est basé sur les conditions suivantes :
- des détecteurs chacun dans une rangée différente ont des portions de leurs surfaces photosensibles respectives qui se recouvrent, en projection sur la direction des rangées ;
- deux images sont saisies successivement de façon synchronisée avec le balayage transversal, de sorte qu'une même portion de scène soit saisie en image d'abord par une partie d'un détecteur de la première rangée, puis par une partie d'un détecteur de la seconde rangée ; et
- le réglage de mise au point optique est varié entre les deux images, pour comparer ensuite les défauts différents de mise au point optique qui affectent respectivement les deux images de la même portion de scène. Une modification de la mise au point optique peut alors être déterminée, ou au moins un sens d'une telle modification, pour réduire le défaut de mise au point.

Un tel procédé nécessite donc d'activer un système de mise au point optique entre deux images qui sont saisies successivement au cours du balayage. Or les systèmes de mise au point optique qui sont compatibles avec les conditions d'utilisation à bord d'un satellite ou d'un vaisseau spatial, sont le plus souvent lents, de sorte que le procédé n'est pas bien adapté pour des balayages qui sont rapides.

Pour la même raison, lorsque le balayage n'est pas trop rapide pour qu'un tel procédé puisse être mis en oeuvre, les deux images de la même scène sont limitées à des portions de la surface photosensible des capteurs d'image qui correspondent à environ 1000 lignes de points d'image, ou pixels, en comptant les lignes perpendiculairement à la direction des rangées de capteurs. Or de nombreux procédés de caractérisation du défaut de mise au point optique sont basés sur une évaluation statistique des différences entre des intensités qui sont saisies individuellement par des pixels. Le défaut de mise au point optique est alors déterminé avec d'autant plus de fiabilité que les deux images de la même scène ont chacune un nombre important de lignes de pixels.

A partir de cette situation, un premier but de la présente invention est de caractériser un défaut de mise au point optique d'un instrument de saisie d'image, même lorsque la scène se déplace rapidement dans le plan de saisie d'image.

Un second but de l'invention est d'améliorer la fiabilité et/ou la précision de la caractérisation du défaut de mise au point optique.

Un troisième but de l'invention consiste à proposer un tel procédé, qui puisse être utilisé à bord d'un satellite ou d'un vaisseau spatial. En particulier, le procédé devrait nécessiter un nombre minimal d'équipements supplémentaires spécifiques, pour éviter d'augmenter trop la masse totale du satellite ou du vaisseau spatial.

Enfin, un quatrième but de l'invention consiste à caractériser le défaut de mise au point optique sans nécessiter d'images-tests qui ne puissent pas être utilisées aussi pour analyser le contenu de la scène photographiée.

Pour atteindre certains au moins de ces buts ou d'autres, l'invention propose un procédé pour caractériser un défaut de mise au point optique d'un instrument de saisie d'image, lorsque l'instrument comprend :
- une optique de formation d'image, qui est adaptée pour former une image d'une scène dans au moins un plan focal ;
- au moins deux capteurs d'image, qui comprennent chacun un ensemble d'éléments de détection de points d'image disposés à des intersections d'au moins une ligne et de colonnes d'une matrice du capteur, les deux capteurs étant placés parallèlement au dit au moins un plan focal et orientés de sorte que des directions de lignes respectives des capteurs soient identiques ou conjuguées optiquement par un système de duplication de plan focal, et les deux capteurs étant décalés l'un par rapport à l'autre parallèlement aux directions de lignes avec un recouvrement partiel de ces capteurs selon les directions de lignes, de sorte que chaque capteur présente un segment de longueur en recouvrement avec l'autre capteur, et un segment complémentaire sans recouvrement avec l'autre capteur ;
- une unité de commande, qui est adaptée pour contrôler un fonctionnement de saisie d'image coordonné entre les deux capteurs ; et
- un système de mise au point optique, qui est adapté pour déplacer ledit au moins un plan focal de l'optique de formation d'image par rapport aux capteurs, selon une direction perpendiculaire à chaque capteur.

Dans le cadre de la présente description, on entend par segment de longueur d'un capteur qui est en recouvrement avec l'autre capteur, une disposition des deux capteurs selon laquelle un recouvrement géométrique apparaît entre la matrice d'un des capteurs et une projection de la matrice de l'autre capteur. La projection considérée est réalisée avec une direction de projection qui est perpendiculaire aux lignes des deux capteurs, ou perpendiculaire aux lignes de l'un des capteurs et aux lignes d'une matrice fictive qui est conjuguée à la matrice de l'autre capteur par le système de duplication de plan focal. Le recouvrement est donc formé entre des segments de longueur des capteurs, qui sont parallèles à leurs directions de lignes respectives, en projection perpendiculairement à ces directions de lignes.

Le procédé de l'invention comprend les étapes suivantes :
/1/ saisir deux images d'une même portion de scène respectivement avec l'un et l'autre des deux capteurs dans les segments de longueur respectifs de ces capteurs qui sont en recouvrement ;
/2/ calculer deux valeurs d'un contraste séparément pour les deux images de la même portion de scène ; et
/3/ déduire un sens du défaut de mise au point optique le long de la direction perpendiculaire à chaque capteur, à partir d'une comparaison des valeurs de contraste qui sont calculées respectivement pour les deux images de la portion de scène.

Une première caractéristique du procédé de l'invention consiste en ce que les deux capteurs sont montés au sein de l'instrument avec des hauteurs moyennes respectives qui sont différentes dans leurs segments de longueur en recouvrement. Pour cela, ces hauteurs sont mesurées selon la direction perpendiculaire à chaque capteur par rapport à un plan commun de référence ou des plans de référence associés respectivement à chaque capteur et conjugués entre eux par le système de duplication de plan focal.

Une seconde caractéristique du procédé de l'invention consiste en ce que les deux images sont saisies à l'étape /1/ pour un même réglage du système de mise au point, si bien que ledit au moins un plan focal de l'optique de formation d'image soit situé pour les deux images à des distances de défocalisation respectives des deux capteurs qui sont différentes.

Ainsi, dans le procédé de l'invention, les défauts différents de mise au point optique qui existent pour les deux images saisies, sont causés par des différences de hauteur des capteurs d'image dans leurs segments de longueur qui sont en recouvrement. Cette différence entre les défauts de mise au point résulte de la première caractéristique qui concerne la construction de l'instrument de saisie d'image. Une mise au point qui serait exacte simultanément dans les deux segments de longueur des capteurs qui sont en recouvrement, est donc impossible. Aucune modification de la mise au point optique de l'instrument n'est réalisée entre les deux images, si bien que la durée entre les deux images n'est pas limitée dans le sens de sa réduction, par la vitesse de fonctionnement du système de mise au point optique. Le procédé de l'invention est donc compatible avec une variation rapide de la scène qui est photographiée, ce qui est le cas pour le mode push-broom de saisie d'image, en particulier.

Pour la même raison, chaque image de la portion de scène qui est commune aux deux capteurs, et qui est utilisée pour déduire le sens du défaut de mise au point optique, peut avoir un nombre important de lignes comptées selon la direction des colonnes de chaque capteur. La caractérisation du défaut de mise au point optique peut alors être plus fiable.

Le procédé de l'invention présente notamment les avantages suivants :
- il ne nécessite pas d'équipements supplémentaires qui soient dédiés uniquement à la mise en oeuvre de ce procédé ;
- il peut être facilement utilisé à bord d'un satellite ou d'un vaisseau spatial. Notamment, les commandes et les traitements d'image qui sont utilisés peuvent être réalisés de façon autonome et automatique à bord du satellite ou du vaisseau spatial, sans qu'une intervention à distance par un opérateur soit nécessaire ; et
- les deux images qui sont saisies à l'étape /3/ peuvent aussi participer à une fonction d'imagerie par leur contenu d'image. Autrement dit, elles peuvent ne pas être dédiées uniquement à la fonction de caractérisation du défaut de mise au point optique.

Un procédé selon l'invention est compatible avec une disposition des deux capteurs d'image chacun parallèlement à un même plan focal de l'optique de formation d'image. Dans ce cas, ce plan focal commun est sensiblement parallèle aux surfaces photosensibles respectives des deux capteurs d'image.

Mais l'invention est aussi compatible avec une disposition des deux capteurs d'image parallèlement à des plans focaux de l'optique de formation d'image qui sont différents. Une telle structure de l'instrument de saisie d'image peut être utile notamment lorsque chaque capteur d'image présente un cadre périphérique qui ne participe pas à sa surface photosensible, et qui empêche de rapprocher suffisamment les surfaces photosensibles des deux capteurs. Dans ce cas, l'optique de formation d'image comprend un système de duplication de plan focal, qui est adapté pour produire plusieurs plans focaux qui sont conjugués optiquement entre eux par ce système de duplication.

L'invention propose aussi un instrument de saisie d'image qui comprend :
- l'optique de formation d'image, les deux capteurs d'image et l'unité de commande tels qu'ils ont été introduits précédemment ;
- un système de mise au point optique, qui est adapté pour déplacer ledit au moins un plan focal de l'optique de formation d'image par rapport aux capteurs, selon une direction perpendiculaire à chaque capteur ; et
- un contrôleur de mise au point optique, qui est adapté pour commander une exécution des étapes /1/ à /3/, en coopération avec l'unité de commande.

Les deux capteurs sont montés au sein de l'instrument conformément à la première caractéristique qui a énoncée plus haut pour le procédé, et le contrôleur de mise au point est adapté pour réaliser en outre la seconde caractéristique du procédé.

Un procédé et un instrument de saisie d'image qui sont conformes à l'invention peuvent avantageusement bénéficier des perfectionnements suivants, mis en oeuvre individuellement ou en combinaison :
- le sens du défaut de mise au point, lorsqu'il est compté à partir dudit au moins un plan focal, est déterminé à l'étape /3/ comme partant d'une position de surface photosensible de celui des deux capteurs pour lequel la valeur de contraste est la plus élevée, vers une position de surface photosensible du capteur pour lequel la valeur du contraste est la plus faible, les positions des surfaces photosensibles étant identifiées pour les segments de longueur qui sont en recouvrement entre les deux capteurs ;
- un écart entre les hauteurs moyennes respectives des deux capteurs dans les segments de longueur respectifs qui sont en recouvrement, peut être supérieur à une variation moyenne de niveaux individuels des éléments de détection de points d'image au sein de chaque segment de longueur d'un des capteurs qui est en recouvrement avec l'autre capteur, ces niveaux étant mesurés selon la direction perpendiculaire à chaque capteur ;
- l'écart entre les hauteurs moyennes respectives des deux capteurs dans les segments de longueur respectifs qui sont en recouvrement, peut être supérieur à 20 µm ;
- l'écart entre les hauteurs moyennes respectives des deux capteurs dans les segments de longueur respectifs qui sont en recouvrement, peut être inférieur à une valeur-seuil de défaut de mise au point optique qui correspond à une dégradation de résolution d'une image qui est saisie ;
- l'écart entre les hauteurs moyennes respectives des deux capteurs dans les segments de longueur respectifs qui sont en recouvrement, peut être plus grand qu'un écart entre les hauteurs moyennes respectives des capteurs dans les segments complémentaires sans recouvrement ;
- les deux capteurs peuvent avoir chacun une seule ligne d'éléments de détection de points d'image, comptée selon une direction des colonnes du capteur, ou les deux capteurs peuvent être chacun du type à intégration décalée temporellement, ou TDI pour «time delay integration» ;
- une image complète peut être acquise à l'étape /1/ en utilisant aussi les segments complémentaires sans recouvrement des capteurs, cette image complète incluant les deux images de la portion de scène saisies en redondance par les segments de longueur des capteurs qui sont en recouvrement ;
- les deux capteurs peuvent être décalés en outre l'un par rapport à l'autre parallèlement à la direction de colonne de chaque capteur. Dans ce cas, l'unité de commande peut être adaptée pour contrôler l'exécution de l'étape /1/ de sorte que les deux images soient saisies respectivement par l'un et l'autre des deux capteurs avec un retard entre ces deux images qui correspond à un déplacement de la portion de scène dans ledit au moins un plan focal, à partir de l'un des deux capteurs jusqu'à l'autre capteur selon la direction de colonne. L'invention peut alors être utilisée au cours d'une séquence d'imagerie avec balayage, notamment avec un balayage de type push-broom ;
- l'étape supplémentaire suivante peut être effectuée après l'étape /3/ :
   /4/ activer le système de mise au point optique pour déplacer ledit au moins un plan focal de l'optique de formation d'image dans le sens opposé à celui du défaut de mise au point ;
- l'étape /3/ peut comprendre en outre un calcul par extrapolation d'un réglage approché du système de mise au point, pour rapprocher ledit au moins un plan focal d'une position moyenne des capteurs selon la direction perpendiculaire à chaque capteur, le réglage approché étant extrapolé à partir des valeurs de contraste calculées respectivement pour les deux images de la portion de scène.

L'invention propose encore un procédé d'assemblage d'un instrument de saisie d'image, qui comprend les étapes suivantes :
- fournir une optique de formation d'image, une unité de commande, un système de mise au point optique et un contrôleur de mise au point optique tels que décrits précédemment ; et
- placer les deux capteurs dans ledit au moins un plan focal comme décrit précédemment.

Le procédé d'assemblage comprend en outre l'étape suivante :
- ajuster des hauteurs moyennes respectives des deux capteurs au sein de l'instrument, de sorte que ces hauteurs moyennes soient différentes entre les deux capteurs dans les segments de longueur respectifs qui sont en recouvrement, les hauteurs étant mesurées selon la direction perpendiculaire à chaque capteur par rapport à un plan commun de référence ou des plans de référence associés respectivement à chaque capteur et conjugués entre eux par le système de duplication de plan focal.

Un tel procédé d'assemblage peut être appliqué à un instrument de saisie d'image comme décrit plus haut, et/ou adapté pour mettre en oeuvre un procédé selon l'invention, pour caractériser un défaut de mise au point optique d'un instrument de saisie d'image.

Chaque capteur peut être ajusté en hauteur en disposant au moins une cale entre le capteur et un support de celui-ci au sein de l'instrument.

Les capteurs peuvent être montés au sein de l'instrument de sorte qu'un écart soit fixé définitivement par montage, entre les hauteurs moyennes respectives des capteurs dans les segments de longueur qui sont en recouvrement.

L'invention peut aussi être appliquée à un ensemble de deux instruments de saisie d'images dont les champs optiques d'entrée sont partiellement en recouvrement l'un avec l'autre. L'Homme du métier comprend que les problèmes techniques qui sont résolus par l'invention s'appliquent de façon similaire à un tel ensemble d'instruments, et que les caractéristiques techniques qui les résolvent selon l'invention sont identiques dans leurs principes à celles qui ont été présentées précédemment. Par conséquent, l'invention concerne aussi un procédé pour caractériser un défaut de mise au point optique d'un instrument de saisie d'image parmi deux instruments de saisie d'image, suivant lequel chaque instrument comprend séparément de l'autre instrument :
- une optique de formation d'image, qui est adaptée pour former une image d'une scène dans un plan focal ;
- un capteur d'image, qui est placé parallèlement au plan focal, et qui comprend un ensemble d'éléments de détection de points d'image disposés à des intersections d'au moins une ligne et de colonnes d'une matrice du capteur ; et
- un système de mise au point optique, qui est adapté pour déplacer le plan focal de l'optique de formation d'image par rapport au capteur, selon une direction perpendiculaire au capteur du même instrument.

Les deux instruments sont disposés en parallèle de sorte que des champs optiques d'entrée qui sont respectivement conjugués avec les deux capteurs, par leurs optiques de formation d'image respectives, présentent un recouvrement partiel dans la scène, et les deux instruments sont orientés autour d'axes optiques respectifs de sorte que les lignes d'éléments de détection de points d'image des deux capteurs soient parallèles à une direction commune dans la scène. Des segments de longueur respectifs des deux capteurs qui sont conjugués chacun avec le recouvrement des champs optiques d'entrée sont alors appelés segments de longueur en recouvrement des capteurs.

Une unité de commande est en outre adaptée pour contrôler un fonctionnement de saisie d'image qui est coordonné entre les deux instruments.

Dans ce cas, le procédé de l'invention comprend les étapes suivantes :
/1/ saisir deux images d'une même portion de scène respectivement avec l'un et l'autre des deux instruments dans les segments de longueur respectifs des capteurs qui sont en recouvrement ;
/2/ calculer deux valeurs d'un contraste séparément pour les deux images de la même portion de scène ; et
/3/ déduire un sens du défaut de mise au point optique le long de la direction perpendiculaire à chaque capteur, à partir d'une comparaison des valeurs de contraste calculées respectivement pour les deux images de la portion de scène.

Les deux images sont alors saisies à l'étape /1/ pour des réglages respectifs qui sont différents pour les deux systèmes de mise au point, si bien que les plans focaux respectifs des deux optiques de formation d'image soient situés pour les dites images à des distances de défocalisation respectives des deux capteurs qui sont différentes.

Dans des perfectionnements d'une telle application de l'invention à un ensemble de deux instruments de saisie d'images, le sens du défaut de mise au point pour l'un des deux instruments, compté à partir du plan focal de cet instrument, peut être déterminé à l'étape /3/ comme partant d'une position de surface photosensible de celui des deux capteurs pour lequel la valeur de contraste est la plus élevée, vers une position de surface photosensible du capteur pour lequel la valeur du contraste est la plus faible. Pour cela, les positions des surfaces photosensibles sont identifiées pour les segments de longueur qui sont en recouvrement entre les deux capteurs, et rapportées à celui des deux instruments pour lequel le sens du défaut de mise au point est déterminé.

D'autres particularités et avantages de la présente invention apparaîtront dans la description ci-après d'exemples de mise en oeuvre non limitatifs, en référence aux dessins annexés, dans lesquels :
- la Figure 1a est un schéma synoptique d'un instrument de saisie d'image selon un premier mode de réalisation de l'invention ;
- la Figure 1b correspond à la partie droite de la Figure 1a pour un second mode de réalisation de l'invention ;
- la Figure 2 est une vue de profil de capteurs d'image agencés selon l'invention ;
- la Figure 3 est un diagramme montrant des variations d'un contraste d'image en fonction d'une distance de défocalisation ;
- les Figures 4a à 4d sont des diagrammes analogues à la figure 3, pour illustrer plusieurs situations possibles ; et
- la Figure 5 est un schéma synoptique d'un ensemble de deux instruments de saisie d'image auquel l'invention peut être appliquée.

Pour raison de clarté, les dimensions des éléments qui sont représentés dans ces figures ne correspondent ni à des dimensions réelles ni à des rapports de dimensions réels. Notamment, certains décalages entre détecteurs qui sont essentiels pour l'invention ont été exagérés. En outre, des références identiques qui sont indiquées dans des figures différentes désignent des éléments identiques ou qui ont des fonctions identiques.

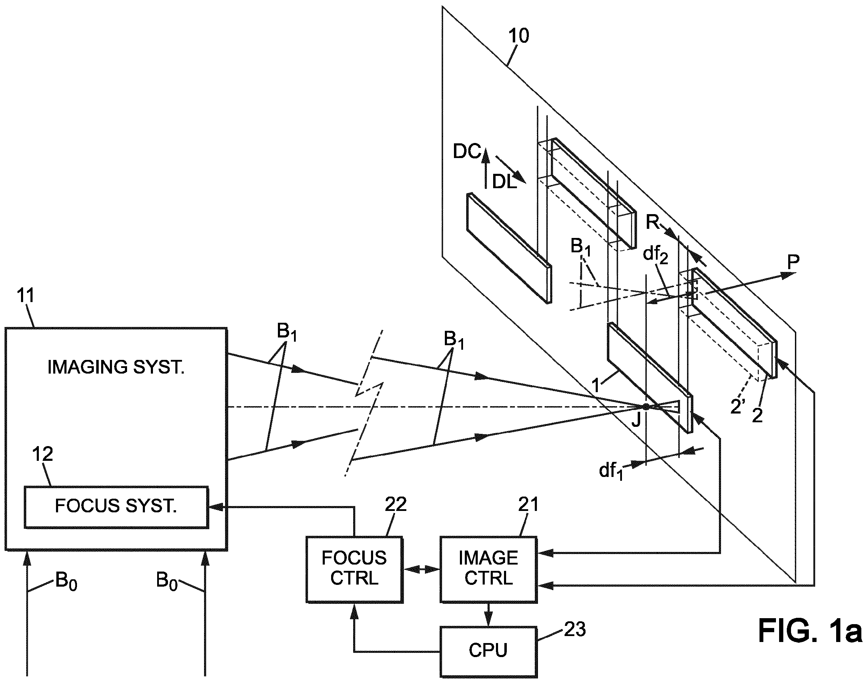

Conformément à la Figure 1a, un instrument de saisie d'image comprend une optique de formation d'image 11, notée «IMAGING SYST.». L'optique 11 reçoit en entrée un faisceau B₀ en provenance d'une scène qui est située dans un champ optique d'entrée de l'instrument, et produit en sortie un faisceau imageant noté B₁. Pour une application d'imagerie spatiale, l'optique 11 peut être un télescope d'un modèle connu de l'Homme du métier. Le faisceau imageant B₁ converge en un point J d'un plan focal de l'optique 11. Ce point J varie dans le plan focal en fonction de la direction à l'intérieur du champ optique d'entrée, dans laquelle se trouve le point de la scène qui correspond au point d'image J.

L'instrument de saisie d'image comprend aussi un système de mise au point optique 12, noté «FOCUS SYST.». Le système 12 est capable de déplacer le plan focal selon une direction P qui est perpendiculaire à ce plan, par exemple en modifiant la convergence du faisceau imageant B₁. P est appelée indifféremment direction de profondeur ou direction de mise au point optique. Différentes technologies sont connues pour le système 12, notamment lorsque l'optique 11 comprend un télescope. Par exemple, un miroir primaire du télescope peut être contrôlé thermiquement pour modifier sa courbure, un miroir secondaire du télescope peut être déplacé le long de l'axe optique du miroir primaire, ou encore un miroir déformable à l'aide d'actionneurs peut être situé dans une pupille de l'optique 11.

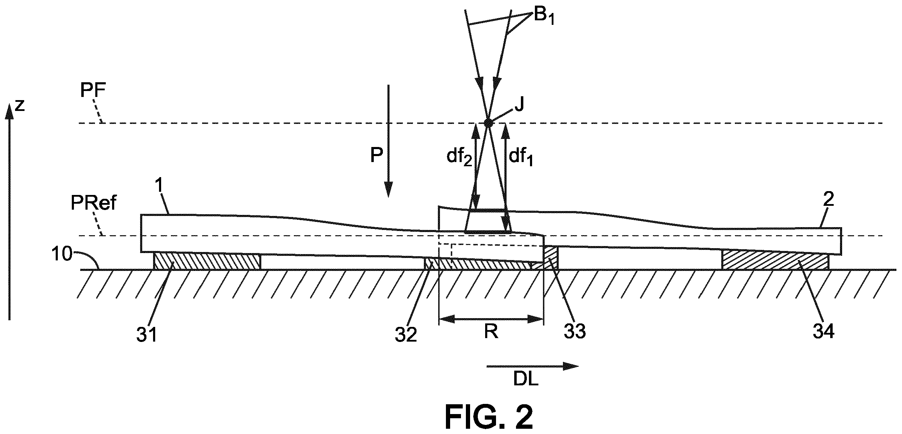

L'instrument de saisie d'image comprend aussi au moins deux capteurs d'image 1 et 2 qui sont disposés de sorte que leurs surfaces photosensibles respectives soient sensiblement parallèles au plan focal. Chacun des capteurs 1 et 2 est du type détecteur matriciel, à photodétecteurs élémentaires qui forment individuellement un élément de détection de point d'image. Ces photodétecteurs sont agencés aux intersections de lignes et de colonnes d'une matrice à l'intérieur de la surface photosensible du capteur. Par exemple, les photodétecteurs élémentaires peuvent être carrés avec des côtés de 13 µm (micromètre), et chaque capteur 1, 2 peut comporter 12 000 photodétecteurs par ligne et un nombre quelconque de photodétecteurs par colonne, notamment 1 seul photodétecteur par colonne ou 64 photodétecteurs par colonne. Les deux capteurs 1 et 2 sont disposés de sorte que leurs lignes respectives soient sensiblement parallèles d'un capteur à l'autre, et donc de même pour leurs colonnes. DL et DC désignent alors respectivement la direction de ligne et la direction de colonne, communes aux deux capteurs. Les deux capteurs 1 et 2 sont portés par un support 10, et ajustés en profondeur selon la direction P. Cet ajustement forme une caractéristique de la présente invention et sera décrite plus loin en référence à la Figure 2.

Dans des modes de mise en oeuvre particuliers de l'invention, les capteurs 1 et 2 peuvent être du type TDI, pour «Time Delay Integration» en anglais, en considérant que chaque étage TDI constitue une ligne distincte d'une matrice équivalente. Dans ce cas, les capteurs TDI peuvent comporter chacun 64 étages TDI selon la direction de colonne DC, par exemple. D'après le fonctionnement d'un capteur TDI, tous les étages TDI d'un même capteur participent à l'obtention d'une seule valeur d'intensité par colonne. Des capteurs TDI à 64 étages peuvent par exemple être utilisés pour la présente invention.

Les deux capteurs 1 et 2 sont décalés l'un par rapport à l'autre selon la direction DL, de telle sorte qu'ils présentent des segments de longueur respectifs qui sont en recouvrement d'un capteur à l'autre, dans une projection sur la direction DL. Ainsi, chacun des capteurs 1 et 2 présente selon la direction de ligne DL, un segment de longueur en recouvrement et un segment de longueur complémentaire qui n'est pas en recouvrement avec l'autre capteur. R désigne la longueur de recouvrement des capteurs 1 et 2.

Dans le premier mode de mise en oeuvre de l'invention qui est illustré par la Figure 1a, et dans lequel les deux capteurs 1 et 2 sont destinés à recevoir le même faisceau imageant B₁, les deux capteurs sont en outre décalés selon la direction de colonne DC pour permettre leur recouvrement partiel selon la direction de ligne DL.

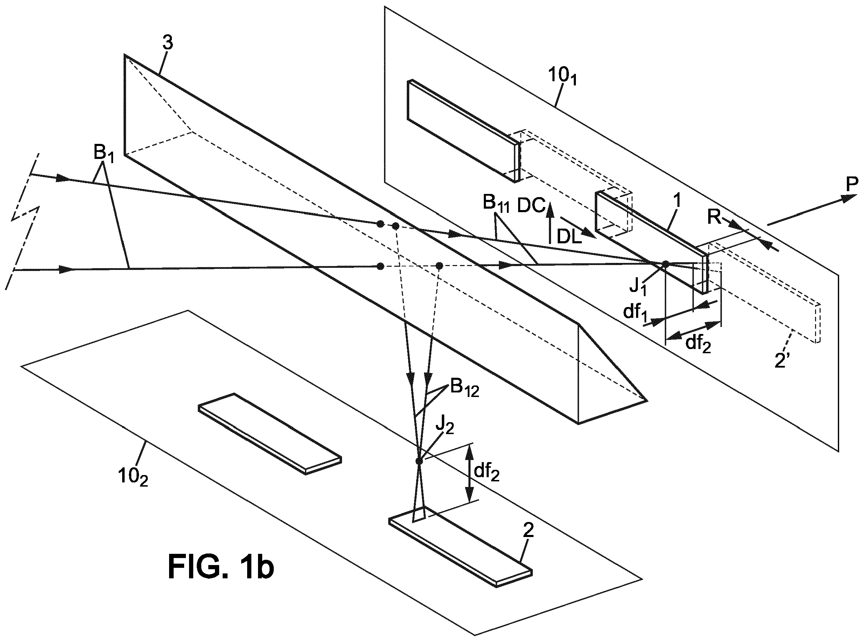

Ainsi, les trois décalages suivants sont mis en oeuvre, entre les capteurs 1 et 2 :
- un premier décalage, selon la direction de ligne DL, qui permet d'augmenter la largeur du champ optique total. Ce premier décalage est limité pour créer la longueur de recouvrement R entre les deux capteurs, qui est nécessaire pour l'invention ;
- un deuxième décalage, selon la direction de mise au point P, entre les segments respectifs des deux capteurs qui sont en recouvrement, et qui est aussi nécessaire pour l'invention ; et
- un troisième décalage, selon la direction de colonne DC, qui existe dans le mode de mise en oeuvre de la Figure 1a mais n'est pas indispensable pour l'invention. En particulier, ce troisième décalage pourra être évité dans le mode alternatif de mise en oeuvre de l'invention qui est illustré par la Figure 1b et sera décrit plus loin.

Pratiquement, chaque capteur comprend une zone morte optiquement (non représentée) qui entoure sa surface photosensible, notamment pour contenir des composants de lecture et de commande des photodétecteurs. La largeur de cette zone morte impose une valeur minimale pour le décalage des capteurs 1 et 2 selon la direction de colonne DC.

Pour visualiser ces décalages, le cadre en traits interrompus qui est référencé 2' est une projection de la surface photosensible du capteur 2, qui ramène le segment en recouvrement de ce capteur 2 à un même niveau selon la direction P que le segment en recouvrement du capteur 1.

Eventuellement, l'instrument peut comprendre des capteurs d'image supplémentaires comme représenté sur la Figure 1a. Ceux-ci peuvent aussi être portés par le support 10, être alignés chacun avec l'un des capteurs 1 ou 2 selon la direction de ligne DL, en présentant des recouvrements supplémentaires qui sont formés de la même façon que le recouvrement entre les capteurs 1 et 2.

L'instrument de saisie d'image comprend en outre :
- une unité de commande 21, notée «IMAGE CTRL», pour contrôler un fonctionnement coordonné des capteurs d'image 1 et 2 ;
- un contrôleur de mise au point optique 22, noté «FOCUS CTRL», pour caractériser selon l'invention un défaut de mise au point optique de l'instrument, et contrôler un fonctionnement du système de mise au point 12 ; et
- une unité de calcul 23, pour analyser des valeurs d'intensité qui sont produites par les photodétecteurs des capteurs 1 et 2.

En particulier, l'unité de calcul 23 est adaptée pour calculer des valeurs de contraste d'images ou de portions d'images qui sont saisies par chacun des capteurs 1 et 2. Par exemple, ces valeurs de contraste peuvent être basées sur des différences entre des intensités qui sont saisies par des photodétecteurs voisins à l'intérieur de chaque capteur ou segment de capteur. Eventuellement, le contraste calculé peut être limité à une combinaison de différences d'intensité entre des photodétecteurs qui sont voisins selon la direction de ligne DL uniquement, ou selon la direction de colonne DC uniquement. D'autres formules et méthodes de calcul de contraste qui sont connues de l'Homme du métier, peuvent être utilisées alternativement et de façon équivalente. En particulier, il est possible de tenir compte d'un écart de gain qui peut exister entre les capteurs, en intégrant dans le calcul du contraste une normalisation par rapport à des valeurs moyennes des intensités qui sont saisies par les photodétecteurs de chaque capteur.

La Figure 1b montre un agencement alternatif des capteurs 1 et 2 pour saisir les images qui sont formées par l'optique 11. Un système de duplication de plan focal qui est référencé 3 divise le faisceau imageant B₁ en deux sous-faisceaux B₁₁ et B₁₂ qui sont dirigés respectivement vers le capteur d'image 1 et le capteur d'image 2. Les deux capteurs 1 et 2 peuvent alors être portés par des supports respectifs 10₁ et 10₂, qui permettent de contrôler précisément les positions des capteurs l'un par rapport à l'autre. Les deux sous-faisceaux B₁₁ et B₁₂ convergent donc dans des plans focaux respectifs, qui sont conjugués entre eux par le système de duplication 3. Ce système 3 peut avoir l'une des nombreuses constitutions connues de l'Homme du métier. Par exemple, il peut être réalisé à l'aide d'un prisme qui fonctionne simultanément en transmission pour le sous-faisceau B₁₁ et en réflexion pour le sous-faisceau B₁₂. De préférence, le système 3 peut être sélectionné pour que les images qui sont produites respectivement par les deux sous-faisceaux B₁₁ et B₁₂ aient des grandissements qui sont identiques. La référence 2' dans la Figure 1b désigne un emplacement qui est conjugué à celui de la surface photosensible du capteur 2 par le système de duplication de plan focal 3. Autrement dit, l'emplacement 2' pour le capteur 2 par rapport au sous-faisceau B₁₁ est équivalent à l'emplacement réel du même capteur 2 par rapport au sous-faisceau B₁₂. En particulier, l'emplacement 2' fait apparaître les décalages par rapport au capteur 1 qui sont effectifs optiquement, selon les trois directions de ligne DL, de colonne DC et de mise au point P.

Ainsi, l'emplacement 2' qui est conjugué au capteur 2 présente simultanément le décalage R selon la direction de ligne DL, et un décalage en profondeur selon la direction P, par rapport au capteur 1. Grâce au fait que les deux capteurs 1 et 2 soient situés dans deux voies optiques qui sont différentes pour ce second mode de mise en oeuvre de l'invention, le capteur 2 peut être situé sur le support 10₂ de sorte que son emplacement conjugué 2' présente un décalage nul par rapport au capteur 1 selon la direction de colonne DC. Toutefois, ce décalage selon la direction DC peut encore être quelconque, à condition qu'il soit pris en compte pour les images qui sont saisies de façon coordonnée respectivement par les deux capteurs 1 et 2.

J₁ et J₂ sont respectivement les points de convergence des sous-faisceaux B₁₁ et B₁₂ lorsque le faisceau B₁ est issu d'un point source de la scène qui est imagée : J₁ et J₂ sont donc conjugués l'un avec l'autre par le système de duplication de plan focal 3. Par conséquent, chacun des points J₁ et J₂ est équivalent au point de convergence J du premier mode de mise en oeuvre de l'invention qui a été décrit en référence à la Figure 1a.

Les supports 10₁ et 10₂ peuvent porter chacun des capteurs d'image supplémentaires comme représenté sur la Figure 1b. Ceux-ci peuvent être alignés avec les capteurs 1 ou 2 selon la direction de ligne DL sur les supports respectifs 10₁ et 10₂. En outre, ces capteurs supplémentaires peuvent aussi être agencés pour que les emplacements des capteurs qui sont portés par le support 10₂, et conjugués par le système de duplication de plan focal 30, présentent par rapport aux capteurs qui sont portés par le support 10₁ les décalages qui sont nécessaires à l'application de l'invention.

A la lumière des correspondances optiques qui viennent d'être expliquées, l'Homme du métier comprend que les premier et second modes de mise en oeuvre de l'invention, illustrés respectivement par les Figures 1a et 1b, sont équivalents. Toutefois, l'invention requiert qu'une même portion de la scène soit saisie par les deux capteurs 1 et 2 dans leurs segments de longueur qui sont en recouvrement selon la direction DL. Lorsque les deux capteurs 1 et 2 n'ont pas de décalage effectif l'un par rapport à l'autre selon la direction de colonne DC, comme dans le cas qui est représenté par la Figure 1b, les images peuvent être saisies simultanément par les deux capteurs. Par contre, lorsque les deux capteurs 1 et 2 sont décalés l'un par rapport à l'autre selon la direction de colonne DC, ils sont activés chacun à des instants respectifs tels que l'image de la portion scène se soit déplacée d'un capteur à l'autre, pour être dans la même position sur l'un puis sur l'autre des segments en recouvrement de chaque capteur au moment de la saisie de l'image correspondante. En particulier, le déplacement de l'image dans le plan focal, ou dans les plans focaux, peut résulter d'un balayage progressif d'une fauchée selon la direction longitudinale du mode push-broom de saisie d'image. Les saisies d'images par chacun des capteurs 1 et 2 sont alors synchronisées avec ce déplacement d'image. De cette façon, il est possible dans tous les cas de saisir le même contenu d'image par chacun des deux segments de longueur qui sont en recouvrement, du capteur 1 et du capteur 2.

Par conséquent, la présente description peut être poursuivie indifféremment en référence au mode de mise en oeuvre de la Figure 1a ou celui de la Figure 1b. La représentation en projection de la Figure 2 fait apparaître le recouvrement R et le décalage entre les capteurs selon la direction de profondeur P. Le faisceau imageant qui est indiqué dans cette figure correspond donc à la fois au faisceau B₁ de la Figure 1a, et aux sous-faisceaux B₁₁ et B₁₂ de la Figure 1b. Pour un même point source dans la scène qui est imagée, il converge au point J, et produit deux taches qui ont des diamètres différents respectivement sur les segments en recouvrement des capteurs 1 et 2. Ces taches de tailles différentes provoquent une différence de contraste entre les images qui sont saisies pour la portion de scène commune, par l'un et l'autre des segments de longueur en recouvrement du capteur 1 et du capteur 2.

Le point de convergence J appartient au plan focal PF, quelle que soit la position de ce plan qui résulte de chaque réglage du système de mise au point optique 12. La position du plan focal PF, selon la direction P, est repérée par rapport à un plan de référence noté PRef, qui est fixe par rapport aux supports des détecteurs 10, ou 10₁ et 10₂. Le plan de référence PRef peut être choisi arbitrairement selon la direction de profondeur P, mais il est parallèle au plan focal PF quelque soit le réglage du système de mise au point optique 12. Le plan PRef est fixe alors que le plan focal PF est déplacé parallèlement à la direction P lors d'une activation du système de mise au point optique 12.

Chaque capteur 1, 2 peut avoir la forme d'une plaquette dont la face supérieure, telle qu'elle apparaît sur la Figure 2, forme sa surface photosensible. Les deux plaquettes sont fixées sur leur(s) support(s) respectif(s) par exemple au moyen de cales d'épaisseur ou de segments de colle calibrés en épaisseur : 31 et 32 pour le capteur 1, et 33 et 34 pour le capteur 2. En réalité, la surface photosensible de chaque capteur 1, 2 n'est pas exactement plane, mais elle présente des variations de niveau qui sont mesurées entre des photodétecteurs différents de ce capteur selon un axe z perpendiculaire au plan de référence PRef.

Pour l'invention, les détecteurs 1 et 2 sont ajustés selon la direction de profondeur P de sorte que leurs surfaces photosensibles dans leurs segments respectifs qui sont en recouvrement, soient situées à des hauteurs moyennes qui sont différentes par rapport au plan de référence PRef. Ces hauteurs moyennes sont aussi mesurées selon l'axe z. Elles résultent à la fois des variations de niveaux de la surface photosensible de chaque capteur entre des photodétecteurs différents, et de l'ajustement en hauteur de chaque capteur par rapport à son support 10, 10₁ ou 10₂ selon la direction P. Par conséquent, pour un réglage quelconque du système de mise au point optique 12, c'est-à-dire pour une position quelconque du plan focal PF selon la direction de profondeur P, les segments en recouvrement respectifs des capteurs 1 et 2 ont des distances moyennes de séparation qui sont différentes par rapport au plan focal PF. Ainsi, la distance qui est notée df₁, est la distance moyenne de séparation entre la surface photosensible du capteur 1 dans son segment en recouvrement avec le capteur 2, par rapport au plan focal PF. De même, la distance notée df₂ est la distance moyenne de séparation entre la surface photosensible du capteur 2 dans son segment en recouvrement avec le capteur 1, par rapport au plan focal PF. Les distances df₁ et df₂ peuvent aussi être appelées distance de défocalisation respectives des capteurs 1 et 2 dans leurs segments en recouvrement, et leur différence df₁ - df₂ est fixe par construction de l'instrument. Elle est notée Δf dans la suite : Δf = df₁ - df₂. Δf est donc aussi l'écart entre les hauteurs moyennes respectives des deux capteurs 1 et 2 dans leurs segments de longueur respectifs qui sont en recouvrement.

Toutefois, des systèmes d'assemblage particulier des capteurs d'image sur les supports 10, 10₁ ou 10₂ peuvent être utilisés qui permettraient d'ajuster ultérieurement la différence Δf. Par exemple, des systèmes peuvent être utilisés qui mettent en oeuvre un contrôle par chauffage, pour ajuster à l'échelle micrométrique les hauteurs moyennes des capteurs 1 et 2 par rapport au plan de référence PRef.

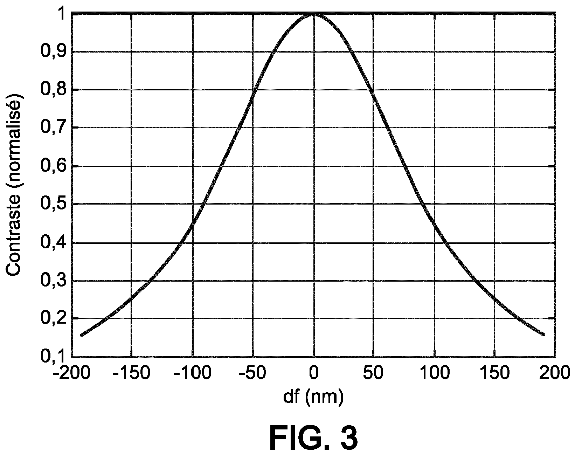

Lorsque la distance df₁ est nulle, le point de convergence J est exactement sur la surface photosensible du capteur 1 dans son segment qui est en recouvrement avec le capteur 2. L'image de la portion de scène qui est alors saisie par ce segment du capteur 1 est nette, avec un contraste qui est maximal à l'intérieur de ce segment. Lorsque df₁ est progressivement augmentée, dans un sens ou l'autre le long de la direction P, la netteté de l'image diminue dans le segment du capteur 1 qui est en recouvrement avec le capteur 2, et son contraste diminue en conséquence. La Figure 3 qui sera décrite plus loin, illustre la variation du contraste en fonction de la distance de défocalisation df₁, dans une limite où le segment de capteur est suffisamment grand pour que le contraste ne dépende quasiment plus du contenu d'image, statistiquement.

Le contraste d'une portion d'image qui est saisie par le segment du capteur 2 qui est en recouvrement avec le capteur 1, varie de la même façon en fonction de la distance de défocalisation df₂. Toutefois, les deux images qui sont saisies par les segments en recouvrement respectifs des capteurs 1 et 2 ne peuvent pas être parfaitement nettes simultanément, ni présenter des distances de défocatisation qui sont égales selon l'axe orienté z, à cause de la différence Δf qui est fixée et non nulle selon l'invention.

Les capteurs 1 et 2 sont donc commandés par l'unité de commande 21 pour saisir deux images de la même portion de la scène dans leurs segments en recouvrement respectifs. Selon une première possibilité, seuls les photodétecteurs de chaque capteur qui sont situés dans le segment de longueur de ce capteur qui est en recouvrement avec l'autre capteur, sont commandés pour saisir des intensités lumineuses reçues. Alternativement, tous les photodétecteurs de chaque capteur sont commandés pour saisir des intensités lumineuses reçues, de sorte que chaque capteur saisit une image complète sur toute sa surface photosensible.

Pour que l'écart de contraste entre les images qui sont saisies par les deux segments de longueur en recouvrement des capteurs 1 et 2, soit plus significatif, l'écart Δf peut avantageusement être supérieur à la variation moyenne de niveaux individuels des photodétecteurs dans chaque segment de longueur d'un des capteurs en recouvrement avec l'autre capteur. Ainsi, une diminution du contraste de chaque image de la portion de scène commune est principalement due à la distance de défocalisation correspondante plutôt qu'aux fluctuations du niveau de la surface photosensible du capteur. Le procédé de l'invention est alors plus fiable, pour déterminer le sens du défaut de mise au point optique.

Pratiquement, l'écart Δf peut être supérieur à 20 µm pour mettre en oeuvre l'invention.

L'amélioration qui est proposée maintenant concerne le cas où les images sont saisies par la totalité de la surface photosensible des capteurs 1 et 2, en plus des portions d'images qui sont saisies par les segments de longueur de ces capteurs qui sont en recouvrement et qui sont utilisées pour l'invention comme décrit plus bas. Les deux images peuvent être nettes simultanément dans les segments de capteurs en recouvrement lorsque l'écart Δf relatif aux hauteurs moyennes respectives des deux capteurs 1 et 2 dans leurs segments de longueur respectifs qui sont en recouvrement, est inférieur à une valeur-seuil de défaut de mise au point optique qui correspond à une dégradation perceptible de la résolution. De façon préférée aussi, l'écart Δf relatif aux segments de longueur des capteurs 1 et 2 qui sont en recouvrement, peut être supérieur à l'écart correspondant qui est mesuré dans les segments complémentaires sans recouvrement des deux capteurs. Chaque image complète qui est saisie par l'un des capteurs peut alors être nette dans sa totalité. La saisie d'image par les deux capteurs avec la portion de scène commune dans les segments en recouvrement, peut alors être utilisée pour une fonction d'imagerie. Ces images peuvent donc avoir simultanément deux fonctions : une fonction d'imagerie pour une mission d'observation, et une fonction pour la mise au point optique de l'instrument. La fonction de mise au point optique utilise une réduction du contraste dans l'un au moins des segments en recouvrement des deux capteurs 1 et 2, qui est suffisamment faible pour ne pas gêner la fonction d'imagerie. Autrement dit, le procédé de l'invention pour déterminer le sens du défaut de mise au point optique, est suffisamment sensible par rapport à une réduction du contraste pour que cette réduction ne nuise pas sensiblement à la qualité des images qui sont saisies.

Etant donné que les deux images sont saisies sans modifier entre elles le réglage du système de mise au point optique 12, aucune durée minimale n'intervient entre les deux images pour permettre une telle modification. Les deux images correspondant à la même portion de scène qui est prise à la fois par l'un et l'autre des deux capteurs 1 et 2, peut avoir une extension quelconque selon la direction de colonne DC. En particulier, cette extension dans le plan focal PF peut couvrir une seule ligne selon la direction DC, ou 64 étages TDI disposés successivement selon la direction DC, lorsque les capteurs 1 et 2 sont du type TDI.

Une valeur de contraste est ensuite calculée séparément pour chaque portion d'image qui est prise dans l'un des segments de longueur de capteur en recouvrement avec l'autre capteur. La Figure 3 est un diagramme des valeurs de contraste qui sont ainsi obtenues, en fonction de la distance de défocalisation existant pour chaque image, df₁ ou df₂ notée génériquement df. Celle-ci est en réalité représentée par l'erreur quadratique de front d'onde, exprimée en nanomètres (nm). L'utilisation de ce diagramme est d'autant plus exacte que chaque segment de longueur de capteur à partir duquel la valeur de contraste est calculée, comporte un grand nombre de photodétecteurs séparés. Par exemple, chaque segment de longueur de capteur qui est en recouvrement avec l'autre capteur peut correspondre à 100 colonnes et 64 lignes adjacentes de photodétecteurs, ou bien 64 étages TDI. Il peut aussi ne comprendre qu'une seule ligne de photodétecteurs, notamment lorsque les capteurs 1 et 2 sont limités eux-mêmes à une ligne unique de photodétecteurs.

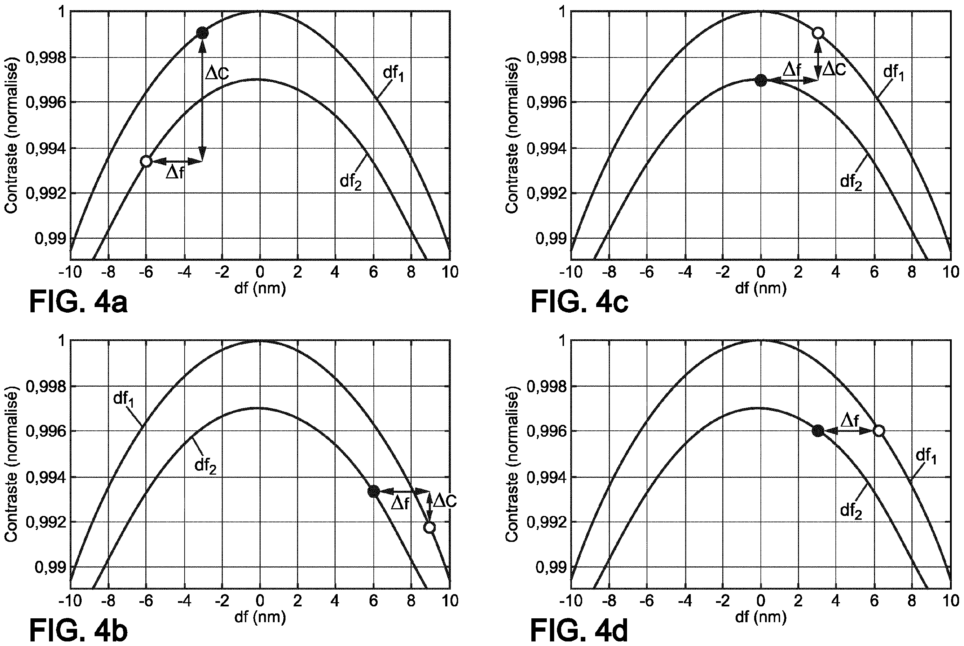

Pour plusieurs raisons, la courbe de contraste de la Figure 3 relative à l'un des capteurs, par exemple, le capteur 2, peut être décalée vers des valeurs de contraste inférieures par rapport à la même courbe pour le capteur 1. Parmi ces raisons, on peut citer notamment un défaut d'alignement des deux capteurs 1 et 2, si bien que leurs directions de colonnes respectives ne sont pas strictement confondues ou conjuguées. Toutefois, un tel défaut peut être partiellement compensé en effectuant un recalage d'image entre les deux capteurs. Une autre raison est une variation plus importante des niveaux des photodétecteurs individuels selon l'axe z, pour l'un des deux capteurs par rapport à l'autre. Les diagrammes des Figures 4a à 4d regroupent alors chacun les courbes de variation de contraste des deux capteurs 1 et 2, en les normalisant par exemple par rapport à la valeur maximale du contraste pour le capteur 1.

Les Figures 4a à 4d illustrent respectivement quatre situations possibles pour les valeurs de contraste qui sont obtenues séparément pour le capteur 1 et pour le capteur 2, dans leurs segments de longueur respectifs qui sont en recouvrement. L'écart Δf selon l'axe des abscisses df, entre les deux points chacun sur une des deux courbes et qui correspondent respectivement au capteur 1 au capteur 2, est fixé et constant. ΔC désigne l'écart entre les valeurs de contraste qui ont été calculées séparément pour les deux capteurs 1 et 2, dans leurs segments de longueur en recouvrement.

Dans la situation qui est illustrée par la Figure 4a, la valeur de contraste pour le capteur 1 est plus élevée que celle pour le capteur 2, alors que la distance de défocalisation df₁ est plus faible que df₂, en valeur absolue. Le plan focal PF est donc situé du côté de la surface du capteur 1, qui est opposé à la surface du capteur 2, selon la direction P dans les segments de longueur en recouvrement.

Dans la situation qui est illustrée par la Figure 4b, la valeur de contraste pour le capteur 1 est plus faible que celle pour le capteur 2, alors que la distance de défocalisation df₁ est plus grande que df₂, en valeur absolue. Le plan focal PF est situé maintenant du côté de la surface du capteur 2, qui est opposé à la surface du capteur 1, selon la direction P dans les segments de longueur en recouvrement.

Ainsi, dans ces deux situations, le plan focal PF est situé du côté de la surface du capteur pour lequel la valeur de contraste est la plus élevée, opposé à la surface du capteur pour lequel la valeur de contraste est la plus faible. De façon équivalente, et lorsque le défaut de mise au point optique est pris orienté au départ de la position actuelle du plan focal PF, en direction des surfaces des capteurs, le sens du défaut existant de mise au point optique va de la position de la surface du capteur pour lequel la valeur de contraste est la plus élevée, vers celle du capteur pour lequel la valeur du contraste est la plus faible.

La situation qui est illustrée par la Figure 4c est causée par l'écart entre les courbes de contraste respectives des deux capteurs 1 et 2 : la valeur de contraste pour le capteur 1 est plus élevée que celle pour le capteur 2, alors que la distance de défocalisation df₁ est plus grande que df₂, en valeur absolue. La règle précédente conduit alors à une détermination erronée pour le sens du défaut existant dans la mise au point optique de l'instrument.

Enfin, la situation de la Figure 4d est un cas d'indétermination pour l'application de la règle qui a été énoncée plus haut, pour déterminer le sens du défaut existant dans la mise au point optique de l'instrument.

Toutefois, les situations des Figures 4c et 4d sont d'autant moins probables que l'écart est faible entre les courbes de variation du contraste en fonction de la distance de défocalisation, respectives pour l'un et l'autre capteur.

Lorsqu'un système 3 de duplication du plan focal PF est utilisé (Figure 1b), les mêmes raisonnements s'appliquent en comparant les positions relatives de la surface photosensible du capteur 1 et de l'emplacement 2' qui est conjugué par le système 3 à la surface photosensible du capteur 2.

Eventuellement, la détermination du sens du défaut de la mise au point optique peut être complétée par une évaluation de la longueur de ce défaut. Une telle évaluation peut être réalisée par une extrapolation basée sur la courbe de la Figure 3, à partir de la valeur de l'écart de Δf qui est connue par construction de l'instrument, et de l'écart ΔC entre les valeurs de contraste qui sont calculées. La longueur extrapolée qui est ainsi obtenue indique un réglage approché pour le système de mise au point 12, avec le sens qui est opposé à celui du défaut de mise au point existant.

Le procédé de l'invention peut aussi être complété en ajustant le système de mise au point optique 12, pour réduire le défaut de mise au point globalement pour les deux capteurs 1 et 2. Un tel ajustement peut être réalisé de façon à déplacer le plan focal PF conformément à la longueur du défaut de mise au point telle qu'elle a été évaluée ci-dessus, dans le sens opposé au défaut existant. Alternativement, le défaut existant de mise au point peut être réduit de façon incrémentale, en déplaçant le plan focal PF d'une longueur fixée, encore dans le sens opposé au défaut existant, puis en continuant par dichotomie. Eventuellement, les deux méthodes peuvent être appliquées successivement pour parvenir à un rapprochement plus rapide vers le meilleur ajustement pour la mise au point optique de l'instrument.

Au cas où des situations analogues à celles des Figures 4c et 4d conduiraient accidentellement à déplacer le plan focal PF dans le sens d'une dégradation de la mise au point optique, l'une des situations des Figures 4a et 4b apparaîtraient de nouveau ultérieurement, pour conduire finalement au meilleur ajustement de la mise au point optique. Par conséquent, la présente invention est robuste par rapport à un écart qui peut exister entre les deux courbes de contraste relatives au capteur 1 et au capteur 2.

D'une façon générale et particulièrement avantageuse, l'invention peut être appliquée au mode «push-broom» de saisie d'images, dans lequel les images sont progressivement ou successivement saisies pendant un défilement de la scène qui est parallèle à la direction des colonnes des capteurs, dans le ou chaque plan focal.

Mais, il est entendu que l'invention qui a été décrite en détail ci-dessus peut être reproduite en introduisant diverses adaptations ou variations. En particulier, l'invention est compatible avec des capteurs d'image qui peuvent fonctionner chacun en lecture continue ligne-à-ligne, ou mode «rolling». Elle est aussi compatible avec des capteurs qui fonctionnent chacun avec une exposition simultanée de tous les photodétecteurs d'un même capteur, ou mode «snapshot».

L'invention est aussi compatible avec une acquisition d'images par balayage, notamment du type balayage transversal prioritaire par rapport à un déplacement longitudinal, ou balayage «push-broom». Alternativement, l'acquisition d'image peut être simultanée pour la totalité du champ d'observation, ou mode «staring». Dans ce cas, des détecteurs matriciels peuvent être utilisés, par exemple à 2000 lignes comptées selon la direction des colonnes, avec chaque ligne qui peut comporter 6000 photodétecteurs.

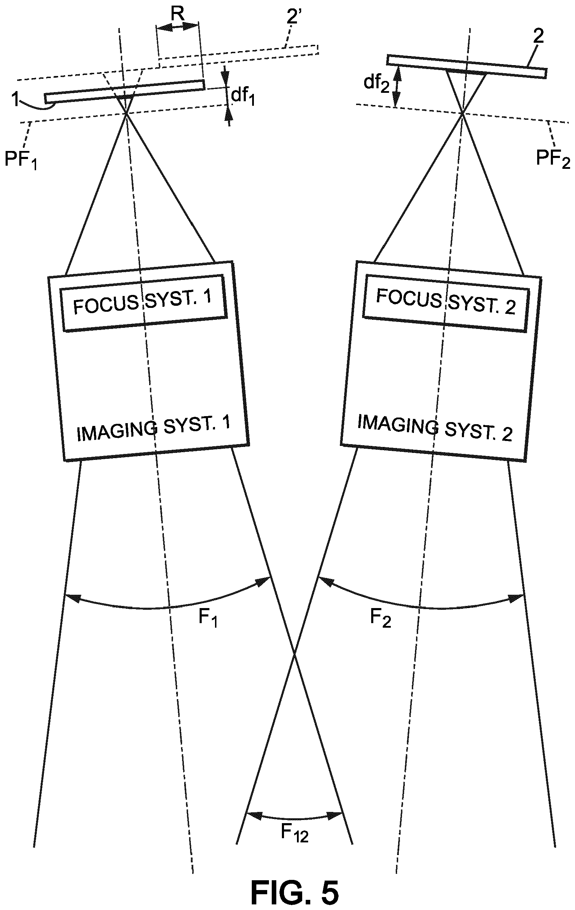

Enfin, la Figure 5 illustre une variante de mise en oeuvre de l'invention, pour deux instruments de saisie d'images qui sont agencés pour fonctionner en parallèle. Le premier instrument comprend l'optique de formation d'image notée IMAGING SYST. 1 avec le système de mise au point FOCUS SYST. 1, et le capteur d'image 1. Le second instrument comprend l'optique de formation d'image IMAGING SYST. 2, le capteur d'image 2 et le système de mise au point FOCUS SYST. 2. Les champs optiques d'entrée des deux instruments sont notés respectivement F₁ et F₂, et présentent un recouvrement de l'un avec l'autre qui est noté F₁₂. PF₁ et PF₂ sont les plans focaux respectifs des optiques IMAGING SYST. 1 et IMAGING SYST. 2. Les autres notations utilisées dans la Figure 5 sont identiques à celles des Figures 1a, 1b et 2. Les deux capteurs d'images 1 et 2 sont orientés de façon à être chacun parallèle à une même direction dans la scène, à l'intérieur du recouvrement F₁₂ des champs optiques d'entrée. Ils présentent alors des segments de longueur respectifs qui sont conjugués avec le recouvrement F₁₂ des champs optiques d'entrée. Ces segments de longueur correspondent au recouvrement R des Figures 1a, 1b et 2. Préférablement, les deux optiques de formation d'image peuvent avoir des caractéristiques optiques qui sont identiques, d'une part, et d'autre part les deux capteurs 1 et 2 peuvent avoir des dimensions individuelles des éléments de détection de points d'image qui sont aussi identiques. Par principe d'équivalence optique entre la structure de la Figure 1a ou 1b, et celle de la Figure 5, la description détaillée de l'invention qui a déjà été fournie dans le cas d'une optique de formation d'image unique, peut être transposée sans difficulté au présent cas de deux optiques qui fonctionnent en parallèle.

## Revendications

1. Procédé pour caractériser un défaut de mise au point optique d'un instrument de saisie d'image, l'instrument comprenant :
- une optique de formation d'image (11), adaptée pour former une image d'une scène dans au moins un plan focal (PF) ;
- au moins deux capteurs d'image (1, 2), comprenant chacun un ensemble d'éléments de détection de points d'image disposés à des intersections d'au moins une ligne et de colonnes d'une matrice du capteur, les deux capteurs étant placés parallèlement au dit au moins un plan focal (PF) et orientés de sorte que des directions de lignes (DL) respectives des capteurs soient identiques ou conjuguées optiquement par un système de duplication de plan focal (3), et les deux capteurs étant décalés l'un par rapport à l'autre parallèlement aux directions de lignes avec un recouvrement partiel (R) des dits capteurs selon les directions de lignes, de sorte que chaque capteur présente un segment de longueur en recouvrement avec l'autre capteur, et un segment complémentaire sans recouvrement avec l'autre capteur ;
- une unité de commande (21) adaptée pour contrôler un fonctionnement de saisie d'image coordonné entre les deux capteurs (1, 2) ; et
- un système de mise au point optique (12), adapté pour déplacer ledit au moins un plan focal (PF) de l'optique de formation d'image par rapport aux capteurs, selon une direction (P) perpendiculaire à chaque capteur ;
le procédé comprenant les étapes suivantes :
/1/ saisir deux images d'une même portion de scène respectivement avec l'un et l'autre des deux capteurs (1, 2) dans les segments de longueur respectifs des dits capteurs qui sont en recouvrement ;
/2/ calculer deux valeurs d'un contraste séparément pour les deux images de la même portion de scène ; et
/3/ déduire un sens du défaut de mise au point optique le long de la direction (P) perpendiculaire à chaque capteur, à partir d'une comparaison des valeurs de contraste calculées respectivement pour les deux images de la portion de scène ;
et étant **caractérisé en ce que** :
les deux capteurs (1, 2) sont montés au sein de l'instrument avec des hauteurs moyennes respectives qui sont différentes dans les segments de longueur respectifs en recouvrement, les dites hauteurs étant mesurées selon la direction (P) perpendiculaire à chaque capteur par rapport à un plan commun de référence (PRef) ou des plans de référence associés respectivement à chaque capteur et conjugués entre eux par le système de duplication de plan focal (3) ; et
les deux images sont saisies à l'étape /1/ pour un même réglage du système de mise au point (12), si bien que ledit au moins un plan focal (PF) de l'optique de formation d'image soit situé pour les dites images à des distances de défocalisation (df₁, df₂) respectives des deux capteurs (1, 2) qui sont différentes.

2. Procédé selon la revendication 1, suivant lequel le sens du défaut de mise au point, compté à partir dudit au moins un plan focal (PF), est déterminé à l'étape /3/ comme partant d'une position de surface photosensible de celui des deux capteurs (1, 2) pour lequel la valeur de contraste est la plus élevée, vers une position de surface photosensible du capteur pour lequel la valeur du contraste est la plus faible, les positions des surfaces photosensibles étant identifiées pour les segments de longueur qui sont en recouvrement entre les deux capteurs.

3. Procédé selon la revendication 1 ou 2, suivant lequel un écart (Δf) entre les hauteurs moyennes respectives des deux capteurs (1, 2) dans les segments de longueur respectifs qui sont en recouvrement, est supérieur à une variation moyenne de niveaux individuels des éléments de détection de points d'image au sein de chaque segment de longueur d'un des capteurs qui est en recouvrement avec l'autre capteur, les dits niveaux étant mesurés selon la direction (P) perpendiculaire à chaque capteur.

4. Procédé selon l'une quelconque des revendications précédentes, suivant lequel l'écart (Δf) entre les hauteurs moyennes respectives des deux capteurs (1, 2) dans les segments de longueur respectifs qui sont en recouvrement, est supérieur à 20 µm.

5. Procédé selon l'une quelconque des revendications précédentes, suivant lequel l'écart (Δf) entre les hauteurs moyennes respectives des deux capteurs (1, 2) dans les segments de longueur respectifs qui sont en recouvrement, est inférieur à une valeur-seuil de défaut de mise au point optique qui correspond à une dégradation de résolution d'une image qui est saisie.

6. Procédé selon l'une quelconque des revendications précédentes, suivant lequel les deux capteurs (1, 2) ont chacun une seule ligne d'éléments de détection de points d'image, comptée selon une direction des colonnes (DC) du capteur, ou les deux capteurs sont chacun du type à intégration décalée temporellement.

7. Procédé selon l'une quelconque des revendications précédentes, suivant lequel une image complète est acquise à l'étape /1/ en utilisant aussi les segments complémentaires sans recouvrement des capteurs (1, 2), ladite image complète incluant les deux images de la portion de scène saisies en redondance par les segments de longueur des capteurs qui sont en recouvrement.

8. Procédé selon l'une quelconque des revendications précédentes, suivant lequel les deux capteurs (1, 2) sont décalés en outre l'un par rapport à l'autre parallèlement à une direction de colonne (DC) de chaque capteur, et l'unité de commande (21) est adaptée pour contrôler l'exécution de l'étape /1/ de sorte que les deux images soient saisies respectivement par l'un et l'autre des deux capteurs (1, 2) avec un retard entre les dites deux images correspondant à un déplacement de la portion de scène dans ledit au moins un plan focal (PF), à partir de l'un des deux capteurs jusqu'à l'autre capteur selon la direction de colonne.

9. Procédé selon l'une quelconque des revendications précédentes, comprenant en outre l'étape suivante, effectuée après l'étape /3/ :
/4/ activer le système de mise au point optique (12) pour déplacer ledit au moins un plan focal (PF) de l'optique de formation d'image dans le sens opposé à celui du défaut de mise au point.

10. Procédé selon l'une quelconque des revendications précédentes, suivant lequel l'étape /3/ comprend en outre un calcul par extrapolation d'un réglage approché du système de mise au point (12), pour rapprocher ledit au moins un plan focal (PF) d'une position moyenne des capteurs (1, 2) selon la direction (P) perpendiculaire à chaque capteur, le réglage approché étant extrapolé à partir des valeurs de contraste calculées respectivement pour les deux images de la portion de scène.

11. Instrument de saisie d'image comprenant :
- une optique de formation d'image (11), adaptée pour former une image d'une scène dans au moins un plan focal (PF) ;
- au moins deux capteurs d'image (1, 2), comprenant chacun un ensemble d'éléments de détection de points d'image disposés à des intersections d'au moins une ligne et de colonnes d'une matrice du capteur, les deux capteurs étant placés parallèlement au dit au moins un plan focal (PF) et orientés de sorte que des directions de lignes (DL) respectives des dits capteurs soient identiques ou conjuguées optiquement par un système de duplication de plan focal (3), et les deux capteurs étant décalés l'un par rapport à l'autre parallèlement aux directions de lignes avec un recouvrement partiel (R) des dits capteurs selon les directions de lignes, de sorte que chaque capteur présente un segment de longueur en recouvrement avec l'autre capteur, et un segment complémentaire sans recouvrement avec l'autre capteur ;
- une unité de commande (21) adaptée pour contrôler un fonctionnement de saisie d'image coordonné entre les deux capteurs (1, 2) ;
- un système de mise au point optique (12), adapté pour déplacer ledit au moins un plan focal (PF) de l'optique de formation d'image par rapport aux capteurs, selon une direction (P) perpendiculaire à chaque capteur ; et
- un contrôleur de mise au point optique (22) adapté pour commander une exécution des étapes suivantes ;
/1/ en coopération avec l'unité de commande (21), saisir deux images de la même portion de scène, respectivement avec l'un et l'autre des deux capteurs (1, 2) dans les segments de longueur respectifs des dits capteurs qui sont en recouvrement ;
/2/ calculer deux valeurs d'un contraste séparément pour les deux images de la même portion de scène ; et
/3/ déduire un sens de défaut de mise au point optique le long de la direction (P) perpendiculaire à chaque capteur, à partir d'une comparaison des valeurs de contraste obtenues respectivement pour les deux images de la portion de scène ;
l'instrument étant **caractérisé en ce que** :
les deux capteurs (1, 2) sont montés au sein de l'instrument avec des hauteurs moyennes respectives qui sont différentes dans les segments de longueur respectifs en recouvrement, les dites hauteurs étant mesurées selon la direction (P) perpendiculaire à chaque capteur par rapport à un plan commun de référence (PRef) ou des plans de référence associés respectivement à chaque capteur et conjugués entre eux par le système de duplication de plan focal (3) ; et
le contrôleur de mise au point (22) est adapté pour commander à l'étape /1/ la saisie des deux images pour un même réglage du système de mise au point (12), si bien que ledit au moins un plan focal (PF) de l'optique de formation d'image soit situé pour les dites images à des distances de défocalisation (df₁, df₂) respectives des deux capteurs (1, 2) qui sont différentes.

12. Instrument selon la revendication 11, dans lequel le contrôleur de mise au point optique (22) est adapté pour déterminer à l'étape /3/ le sens du défaut de mise au point, compté à partir dudit au moins un plan focal (PF), comme partant d'une position de surface photosensible de celui des deux capteurs (1, 2) pour lequel la valeur de contraste est la plus élevée, vers une position de surface photosensible du capteur pour lequel la valeur du contraste est la plus faible, les positions des surfaces photosensibles étant identifiées pour les segments de longueur qui sont en recouvrement entre les deux capteurs.

13. Instrument selon la revendication 11 ou 12, dans lequel un écart (Δf) entre les hauteurs moyennes respectives des deux capteurs (1, 2) dans les segments de longueur respectifs qui sont en recouvrement, est supérieur à une variation moyenne de niveaux individuels des éléments de détection de points d'image au sein de chaque segment de longueur d'un des capteurs qui est en recouvrement avec l'autre capteur, les dits niveaux étant mesurés selon la direction (P) perpendiculaire à chaque capteur.

14. Instrument selon l'une quelconque des revendications 11 à 13, suivant lequel l'écart (Δf) entre les hauteurs moyennes respectives des deux capteurs (1, 2) dans les segments de longueur respectifs qui sont en recouvrement, est supérieur à 20 µm.

15. Instrument selon l'une quelconque des revendications 11 à 14, dans lequel l'écart (Δf) entre les hauteurs moyennes respectives des deux capteurs (1, 2) dans les segments de longueur respectifs qui sont en recouvrement, est inférieur à une valeur-seuil de défaut de mise au point optique qui correspond à une perte de résolution associée à une taille des éléments de détection de points d'image des capteurs.

16. Instrument selon l'une quelconque des revendications 11 à 15, dans lequel l'écart entre les hauteurs moyennes respectives des deux capteurs (1, 2) dans les segments de longueur respectifs qui sont en recouvrement, est plus grand qu'un écart entre les hauteurs moyennes respectives des dits capteurs dans les segments complémentaires sans recouvrement.

17. Instrument selon l'une quelconque des revendications 11 à 16, dans lequel les deux capteurs (1, 2) sont décalés en outre l'un par rapport à l'autre parallèlement à une direction de colonne (DC) de chaque capteur, et
l'unité de commande (21) est adaptée pour contrôler l'exécution de l'étape /1/ de sorte que les deux images soient saisies respectivement par l'un et l'autre des deux capteurs (1, 2) avec un retard entre les dites deux images correspondant à un déplacement de la portion de scène dans ledit au moins un plan focal (PF), à partir de l'un des deux capteurs jusqu'à l'autre capteur selon la direction de colonne.

18. Procédé d'assemblage d'un instrument de saisie d'image, comprenant les étapes suivantes :
/1/ fournir une optique de formation d'image (11), adaptée pour former une image d'une scène dans au moins un plan focal (PF) ;
/2/ placer au moins deux capteurs (1, 2) parallèlement au dit au moins un plan focal, chaque capteur comprenant un ensemble d'éléments de détection de points d'image disposés à des intersections d'au moins une ligne et de colonnes d'une matrice dudit capteur, les deux capteurs étant orientés de sorte que des directions de lignes (DL) respectives des dits capteurs soient identiques ou conjuguées optiquement par un système de duplication de plan focal (3), et les deux capteurs étant décalés l'un par rapport à l'autre parallèlement aux directions de lignes avec un recouvrement partiel (R) des dits capteurs selon les directions de lignes, de sorte que chaque capteur présente un segment de longueur en recouvrement avec l'autre capteur, et un segment complémentaire sans recouvrement avec l'autre capteur ;
/3/ fournir une unité de commande (21) adaptée pour contrôler un fonctionnement de saisie d'image coordonné entre les deux capteurs (1, 2) ;
/4/ fournir un système de mise au point optique (12), adapté pour déplacer ledit au moins un plan focal (PF) de l'optique de formation d'image par rapport aux capteurs, selon une direction (P) perpendiculaire à chaque capteur ; et
/5/ fournir un contrôleur de mise au point optique (22) ;
**caractérisé en ce que** le procédé d'assemblage comprend en outre l'étape suivante :
/6/ ajuster des hauteurs moyennes respectives des deux capteurs (1, 2) au sein de l'instrument, de sorte que les dites hauteurs moyennes soient différentes entre les deux capteurs dans les segments de longueur respectifs qui sont en recouvrement, les dites hauteurs étant mesurées selon la direction (P) perpendiculaire à chaque capteur par rapport à un plan commun de référence (PRef) ou des plans de référence associés respectivement à chaque capteur et conjugués entre eux par le système de duplication de plan focal (3) ;
et **en ce que** le contrôleur (22) est adapté pour exécuter un procédé selon l'une quelconque des revendications 1 à 10, pour caractériser un sens de défaut de mise au point optique de l'instrument de saisie d'image.

19. Procédé d'assemblage selon la revendication 18, suivant lequel chaque capteur (1, 2) est ajusté en hauteur en disposant au moins une cale entre le capteur et un support (10, 10₁, 10₂) dudit capteur au sein de l'instrument.

20. Procédé d'assemblage selon la revendication 18 ou 19, suivant lequel les capteurs (1, 2) sont montés au sein de l'instrument de sorte qu'un écart (Δf) soit fixé définitivement par montage, entre les hauteurs moyennes respectives des dits capteurs dans les segments de longueur qui sont en recouvrement.

21. Procédé d'assemblage selon l'une quelconque des revendications 18 à 20, comprenant en outre l'étape préalable suivante :
- obtenir une valeur de variation moyenne de niveaux individuels des éléments de détection de points d'image au sein de chaque segment de longueur d'un des capteurs (1, 2) qui est en recouvrement avec l'autre capteur, les dits niveaux étant mesurés selon la direction (P) perpendiculaire à chaque capteur ;
et suivant lequel les hauteurs moyennes respectives des deux capteurs (1, 2) sont ajustées à l'étape /6/ de sorte qu'un écart (Δf) entre les dites hauteurs moyennes dans les segments de longueur respectifs qui sont en recouvrement, soit supérieur à la valeur de variation moyenne des niveaux individuels des éléments de détection de points d'image au sein de chaque segment de longueur d'un des capteurs qui est en recouvrement avec l'autre capteur.

22. Procédé d'assemblage selon l'une quelconque des revendications 18 à 21, suivant lequel les hauteurs moyennes respectives des deux capteurs (1, 2) sont ajustées à l'étape /6/ de sorte que l'écart (Δf) entre les dites hauteurs moyennes dans les segments de longueur respectifs qui sont en recouvrement, soit supérieur à 20 µm.

23. Procédé d'assemblage selon l'une quelconque des revendications 18 à 22, suivant lequel les hauteurs moyennes respectives des deux capteurs (1, 2) sont ajustées à l'étape /6/ de sorte que l'écart (Δf) entre les dites hauteurs moyennes dans les segments de longueur respectifs qui sont en recouvrement, soit inférieur à une valeur-seuil de défaut de mise au point optique qui correspond à une perte de résolution associée à une taille des éléments de détection de points d'image des capteurs.

24. Procédé pour caractériser un défaut de mise au point optique d'un instrument de saisie d'image parmi deux instruments de saisie d'image, chaque instrument comprenant séparément de l'autre instrument :
- une optique de formation d'image, adaptée pour former une image d'une scène dans un plan focal ;
- un capteur d'image placé parallèlement au plan focal, et comprenant un ensemble d'éléments de détection de points d'image disposés à des intersections d'au moins une ligne et de colonnes d'une matrice du capteur ; et
- un système de mise au point optique, adapté pour déplacer le plan focal de l'optique de formation d'image par rapport au capteur, selon une direction perpendiculaire au capteur ;
les deux instruments étant disposés en parallèle de sorte que des champs optiques d'entrée respectivement conjugués avec les deux capteurs, par les optiques de formation d'image respectives, présentent un recouvrement partiel dans la scène, et les deux instruments sont orientés autour d'axes optiques respectifs de sorte que les lignes d'éléments de détection de points d'image des deux capteurs soient parallèles à une direction commune dans la scène, des segments de longueur respectifs des deux capteurs qui sont conjugués chacun avec le recouvrement des champs optiques d'entrée étant appelés segments de longueur en recouvrement des capteurs ;
une unité de commande étant adaptée pour contrôler un fonctionnement de saisie d'image coordonné entre les deux instruments ; et
le procédé comprenant les étapes suivantes :
/1/ saisir deux images d'une même portion de scène respectivement avec l'un et l'autre des deux instruments dans les segments de longueur respectifs des capteurs qui sont en recouvrement ;
/2/ calculer deux valeurs d'un contraste séparément pour les deux images de la même portion de scène ; et
/3/ déduire un sens du défaut de mise au point optique le long de la direction perpendiculaire à chaque capteur, à partir d'une comparaison des valeurs de contraste calculées respectivement pour les deux images de la portion de scène ;
et étant **caractérisé en ce que** :
les deux images sont saisies à l'étape /1/ pour des réglages respectifs qui sont différents pour les deux systèmes de mise au point, si bien que les plans focaux respectifs des deux optiques de formation d'image soient situés pour les dites images à des distances de défocalisation respectives des deux capteurs qui sont différentes.

25. Procédé selon la revendication 24, suivant lequel le sens du défaut de mise au point pour l'un des deux instruments, compté à partir du plan focal dudit instrument, est déterminé à l'étape /3/ comme partant d'une position de surface photosensible de celui des deux capteurs pour lequel la valeur de contraste est la plus élevée, vers une position de surface photosensible du capteur pour lequel la valeur du contraste est la plus faible, les positions des surfaces photosensibles étant identifiées pour les segments de longueur qui sont en recouvrement entre les deux capteurs, et rapportées à celui des deux instruments pour lequel le sens du défaut de mise au point est déterminé.

## Patentansprüche

1. Verfahren zur Charakterisierung eines optischen Feineinstellungsfehlers eines Bilderfassungsgeräts, umfassend:
- eine Abbildungsoptik (11), die dazu geeignet ist, ein Abbild von einer Szenerie in mindestens einer Brennebene (PF) zu erzeugen,
- mindestens zwei Bildsensoren (1, 2), die jeweils eine bestimmte Anordnung von Bildpunkterfassungselementen umfassen, die an den Schnittpunkten von mindestens einer Zeile und von Spalten einer Sensormatrix angeordnet sind, wobei die beiden Sensoren in mindestens einer Brennebene (PF) parallel dazu angeordnet und so ausgerichtet sind, dass die Ausrichtungen der jeweiligen Zeilen (DL) der Sensoren identisch sind oder durch ein Brennebenen-Duplizierungssystem (3) optisch zusammengeführt werden, und die beiden Sensoren parallel zueinander in Richtung der Zeilen bei einer teilweisen Überdeckung (R) der Sensoren entlang der Zeilen versetzt sind, so dass jeder Sensor ein Längensegment mit Überdeckung mit dem anderen Sensor und ein Komplementärsegment ohne Überdeckung mit dem anderen Sensor darstellt,
- eine Steuereinheit (21), die dazu geeignet ist, eine zwischen den beiden Sensoren koordinierte Bilderfassung zu steuern (1, 2), und
- ein System zur optischen Feineinstellung (12), das dazu geeignet ist, die mindestens eine Brennebene (PF) der Bilderzeugungsoptik in Bezug auf die Sensoren in einer senkrecht zu jedem Sensor (P) verlaufenden Richtung zu verschieben,
wobei das Verfahren die folgenden Phasen umfasst:
/1/ Erfassung von zwei Bildern desselben Ausschnitts der Szenerie jeweils mit jedem einzelnen der Sensoren (1, 2) innerhalb der jeweiligen Längensegmente der Sensoren, die sich überdecken,
/2/ Getrennte Berechnung von zwei Kontrastwerten für die beiden Bilder desselben Ausschnitts der Szenerie, und
/3/ Ableitung einer Ausprägungsrichtung des Fehlers der optischen Feineinstellung in der senkrecht (P) zu jedem Sensor verlaufenden Richtung anhand eines Vergleichs der jeweils für die beiden Bilder des Ausschnitts der Szenerie berechneten Kontrastwerte,
und **dadurch gekennzeichnet, dass**:
die beiden Sensoren (1, 2) im Gerät jeweils auf mittleren Höhen angebracht sind, die in den jeweiligen, sich überdeckenden Längensegmenten unterschiedlich sind, wobei die Höhen in der senkrecht zu jedem Sensor verlaufenden Richtung (P) in Bezug auf eine gemeinsame Bezugsebene (PRef) bzw. auf Bezugsebenen gemessen werden, welche jedem der Sensoren entsprechend zugeordnet sind und durch das Brennebenen-Duplizierungssystem (3) zusammengeführt werden, und
die beiden Bilder in Phase /1/ bei ein- und derselben Einstellung des Feineinstellungssystems (12) erfasst werden, so dass sich dabei mindestens eine Brennebene (PF) der Bilderzeugungsoptik für die Bilder in Defokussierungsabständen (df₁, df₂) der jeweiligen beiden Sensoren (1, 2) befindet, welche sich voneinander unterscheiden.

2. Verfahren nach Anspruch 1, wobei der Richtungsvektor des Feineinstellungsfehlers in Bezug auf mindestens eine der Brennebenen (PF) in Phase /3/ ausgehend von einer Position auf der lichtempfindlichen Oberfläche desjenigen der beiden Sensoren (1, 2), bei dem der Kontrastwert am größten ist, zu einer Position auf der lichtempfindlichen Oberfläche des Sensors, bei dem der Kontrastwert am kleinsten ist, ermittelt wird, wobei die Positionen auf den lichtempfindlichen Oberflächen für die Längensegmente ermittelt werden, die sich zwischen den beiden Sensoren überdecken.

3. Verfahren nach Anspruch 1 oder 2, wobei eine Abweichung (Δf) zwischen den jeweiligen mittleren Höhen der beiden Sensoren (1, 2) in den entsprechenden, sich überdeckenden Längensegmenten größer ist als die mittlere Varianz der Einzelhöhen der Bildpunkterfassungselemente jedes Längensegments eines der Sensoren, der sich in Überdeckung mit dem anderen Sensor befindet, wobei die Höhen in der senkrecht zu jedem Sensor verlaufenden Richtung (P) gemessen werden.

4. Verfahren nach einem der vorangehenden Ansprüche, wobei die Abweichung (Δf) zwischen den jeweiligen mittleren Höhen der beiden Sensoren (1, 2) in den entsprechenden, sich überdeckenden Längensegmenten größer ist als 20 µm.

5. Verfahren nach einem der vorangehenden Ansprüche, wobei die Abweichung (Δf) zwischen den jeweiligen mittleren Höhen der beiden Sensoren (1, 2) in den entsprechenden, sich überdeckenden Längensegmenten kleiner ist als ein Schwellwert des optischen Feineinstellungsfehlers, welcher einer Verschlechterung der Auflösung des erfassten Bildes entspricht.

6. Verfahren nach einem der vorangehenden Ansprüche, wobei die beiden Sensoren (1, 2) jeweils eine einzige Zeile von Bildpunkterfassungselementen aufweisen, die in eine Richtung der Spalten (DC) des Sensors verläuft, oder beide Sensoren als Typ mit zeitverzögerter Integration ausgeführt sind.

7. Verfahren nach einem der vorangehenden Ansprüche, wobei in Phase /1/ ein vollständiges Bild unter gleichzeitiger Verwendung der komplementären Segmente der Sensoren (1, 2) ohne Überdeckung erfasst wird, wobei das vollständige Bild durch die Längensegmente der Sensoren, die überdeckt sind, zwei redundante Bilder des Ausschnitts der erfassten Szenerie beinhaltet.

8. Verfahren nach einem der vorangehenden Ansprüche, wobei die beiden Sensoren (1, 2) darüber hinaus parallel zu einer Spaltenausrichtung (DC) jedes Sensors zueinander versetzt angeordnet sind, und
die Steuereinheit (21) dazu geeignet ist, die Ausführung von Phase /1/ so zu steuern, dass die Erfassung der beiden Bilder durch jeden der beiden Sensoren (1, 2) mit einer Verzögerung zwischen den beiden Bildern erfolgt, die einer Verschiebung des Ausschnitts der Szenerie mindestens in der genannten Brennebene (PF) von 'dem einem zu dem anderen Sensor in Richtung der Bildspalte entspricht.

9. Verfahren nach einem der vorangehenden Ansprüche, das darüber hinaus eine weitere Phase beinhaltet, die nach Phase /3/ kommt:
/4/ Aktivierung des optischen Feineinstellungssystems (12) zur Verschiebung von mindestens einer Brennebene (PF) der Bilderzeugungsoptik in entgegengesetzter Richtung zur Ausprägung des Feineinstellungsfehlers.

10. Verfahren nach einem der vorangehenden Ansprüche, wobei Phase /3/ darüber hinaus eine Extrapolationsberechnung einer annähernden Einstellung des Feineinstellungssystems (12) zur Annäherung der genannten Brennebene (PF) von einer mittleren Position der Sensoren (1, 2) aus in die senkrecht zu jedem der Sensoren verlaufende Richtung (P) beinhaltet, wobei die annähernde Einstellung anhand der Kontrastwerte extrapoliert wird, die jeweils für die beiden Bilder des Ausschnitts der Szenerie errechnet wurden.

11. Bilderfassungsgerät umfassend:
- eine Bilderzeugungsoptik (11), die geeignet ist, ein Bild einer Szenerie in mindestens einer Brennebene (PF) zu erzeugen:
- mindestens zwei Bildsensoren (1, 2), die jeweils eine bestimmte Anordnung von Bildpunkterfassungselementen beinhalten, die an den Schnittpunkten von mindestens einer Zeile und von Spalten einer Sensormatrix angeordnet sind, wobei die beiden Sensoren in mindestens einer Brennebene (PF) parallel dazu angeordnet und so ausgerichtet sind, dass die Ausrichtungen der jeweiligen Zeilen (DL) der Sensoren identisch sind oder durch ein Brennebenen-Duplizierungssystem (3) optisch zusammengeführt werden, und die beiden Sensoren parallel zueinander in Richtung der Bildzeilen bei einer teilweisen Überdeckung (R) der Sensoren entlang der Bildzeilen versetzt sind, so dass jeder Sensor ein Längensegment mit Überdeckung mit dem anderen Sensor und ein Komplementärsegment ohne Überdeckung mit dem anderen Sensor darstellt,
- eine Steuereinheit (21), die dazu geeignet ist, eine zwischen den beiden Sensoren koordinierte Bilderfassung zu steuern (1, 2),
- ein System zur optischen Feineinstellung (12), das dazu geeignet ist, die mindestens eine Brennebene (PF) der Bilderzeugungsoptik in Bezug auf die Sensoren in einer senkrecht zu jedem Sensor (P) verlaufenden Richtung zu verschieben, und
- eine Steuerung zur optischen Feineinstellung (22), die geeignet ist, die Ausführung der folgenden Phasen zu steuern:
/1/ Erfassung von Bildern desselben Ausschnitts der Szenerie in Zusammenwirken mit der Steuereinheit (21) mit jeweils jedem der beiden Sensoren (1, 2) in den entsprechenden Längensegmenten der Sensoren, die sich überdecken,
/2/ gesonderte Berechnung von zwei Kontrastwerten für die beiden Bilder desselben Ausschnitts der Szenerie, und
/3/ Ableitung eines Ausprägungsrichtung des optischen Feineinstellungsfehlers in der senkrecht zu jedem Sensor verlaufenden Richtung (P) anhand eines Vergleichs der jeweils für die beiden Bilder des Ausschnitts der Szenerie erhaltenen Kontrastwerte,
das Gerät, **dadurch gekennzeichnet, dass**:
die beiden Sensoren (1, 2) im Gerät jeweils auf mittleren Höhen angebracht sind, die in den jeweiligen, sich überdeckenden Längensegmenten unterschiedlich sind, wobei die Höhen in der senkrecht zu jedem Sensor verlaufenden Richtung (P) in Bezug auf eine gemeinsame Bezugsebene (PRef) bzw. auf Bezugsebenen gemessen werden, die jedem der Sensoren entsprechend zugeordnet sind und durch das Brennebenen-Duplizierungssystem (3) zusammengeführt werden, und
die Feineinstellungssteuerung (22) dazu geeignet ist, Phase /1/ der Erfassung der beiden Bilder bei gleicher Einstellung des Feineinstellungssystems (12) zu steuern, so dass sich dabei mindestens eine Brennebene (PF) der Bilderzeugungsoptik für die Bilder in Defokussierungsabständen (df₁, df₂) der jeweiligen beiden Sensoren (1, 2) befindet, welche sich voneinander unterscheiden.

12. Gerät nach Anspruch 11, bei dem die Steuerung der optischen Feineinstellung (22) dazu geeignet ist, in Phase /3/ ausgehend von der mindestens einen Brennebene (PF) die Ausrichtung des Feineinstellungsfehlers von einer Position auf der lichtempfindlichen Oberfläche desjenigen der beiden Sensoren (1, 2), bei dem der Kontrastwert am größten ist, zu einer auf der lichtempfindlichen Oberfläche des Sensors, bei dem der Kontrastwert am kleinsten ist, zu bestimmen, wobei die Positionen auf der lichtempfindlichen Oberfläche für die Längensegmente ermittelt werden, die sich zwischen den beiden Sensoren überdecken.

13. Gerät nach Anspruch 11 oder 12, wobei eine Abweichung (Δf) zwischen den jeweiligen mittleren Höhen der beiden Sensoren (1, 2) in den entsprechenden, sich überdeckenden Längensegmenten größer ist als eine mittlere Varianz der Einzelhöhen der Bildpunkterfassungselemente jedes Längensegments eines der Sensoren, das sich mit dem des anderen Sensors überdeckt, wobei die Höhen in der Richtung gemessen werden, die senkrecht (P) zu jedem Sensor verläuft.

14. Gerät nach einem der Ansprüche 11 bis 13, wobei die Abweichung (Δf) zwischen den jeweiligen mittleren Höhen der beiden Sensoren (1, 2) in den entsprechenden, sich überdeckenden Längensegmenten größer ist als 20 µm.

15. Gerät nach einem der Ansprüche 11 bis 14, wobei die Abweichung (Δf) zwischen den jeweiligen mittleren Höhen der beiden Sensoren (1, 2) in den entsprechenden, sich überdeckenden Längensegmenten kleiner ist als ein Schwellwert des optischen Feineinstellungsfehlers, der einer Verringerung der Auflösung unter Berücksichtigung der Größe der Bildpunkterfassungselemente der Sensoren entspricht.

16. Gerät nach einem der Ansprüche 11 bis 15, wobei die Abweichung zwischen den jeweiligen mittleren Höhen der beiden Sensoren (1, 2) in den entsprechenden, sich überdeckenden Längensegmenten größer ist als eine Abweichung zwischen den jeweiligen mittleren Höhen der Sensoren in den komplementären Segmenten ohne Überdeckung.

17. Gerät nach einem der Ansprüche 11 bis 16, wobei die beiden Sensoren (1, 2) darüber hinaus parallel zu einer Spaltenrichtung (DC) jedes Sensors gegeneinander versetzt sind, und
die Steuereinheit (21) dazu geeignet ist, die Ausführung von Phase /1/ so zu steuern, dass die beiden Bilder jeweils von den einzelnen Sensoren (1, 2) mit einer Verzögerung zwischen den beiden Bildern erfasst werden, die einer Verschiebung des Ausschnitts der Szenerie in der mindestens einen Brennebene (PF) von einem der beiden Sensoren zu dem anderen Sensor in Spaltenrichtung entspricht.

18. Verfahren zum Zusammenbau eines Bilderfassungsgeräts, das folgende Schritte umfasst:
/1/ Bereitstellung einer Bilderzeugungsoptik (11), die dazu geeignet ist, ein Bild einer Szenerie in mindestens einer Brennebene (PF) zu erzeugen,
/2/ Anbringung von mindestens zwei Sensoren (1, 2) parallel zur mindestens einen Brennebene, wobei jeder Sensor eine Anordnung von Bildpunkterfassungselementen beinhaltet, die sich an den Schnittpunkten zwischen mindestens einer Zeile und einer Spalte einer Matrix des Sensors befinden, und die beiden Sensoren so ausgerichtet sind, dass die jeweiligen Richtungen der Zeilen (DL) der Sensoren identisch sind oder durch ein Brennebenen-Duplizierungssystem (3) optisch zusammengeführt werden, und die beiden Sensoren parallel zu den Zeilenrichtungen mit einer partiellen Überdeckung der Sensoren in Zeilenrichtung in der Weise gegeneinander versetzt sind, dass jeder Sensor ein Segment, das sich mit dem anderen Sensor überdeckt, sowie ein komplementäres Segment, das sich mit dem anderen Sensor nicht überdeckt, darstellt,
/3/ Bereitstellung einer Steuereinheit (21), die dazu geeignet ist, eine zwischen den beiden Sensoren (1, 2) koordinierte Bilderfassung zu steuern,
/4/ Bereitstellung eines Systems zur optischen Feineinstellung (12), das dazu geeignet ist, die mindestens eine Brennebene (PF) der Bilderzeugungsoptik in Bezug auf die Sensoren in einer Richtung (P) zu verschieben, die senkrecht zu jedem Sensor verläuft, und
/5/ Bereitstellung einer Steuerung zur optischen Feineinstellung (22),
**dadurch gekennzeichnet, dass** das Verfahren zum Zusammenbau unter anderem folgenden Schritt umfasst:
/6/ Einstellung der jeweiligen mittleren Höhen der beiden Sensoren (1, 2) des Geräts, in der Weise, dass die mittleren Höhen zwischen den beiden Sensoren in den entsprechenden Längensegmenten mit Überdeckung unterschiedlich sind, wobei die Höhen in der Richtung (P), die senkrecht zu jedem Sensor verläuft, in Bezug auf eine gemeinsame Bezugsebene (PRef) oder auf Bezugsebenen gemessen werden, die jeweils jedem der Sensoren zugeordnet sind und durch ein Brennebenen-Duplizierungssystem (3) zusammengeführt werden,
und dadurch, dass die Steuerung (22) dazu geeignet ist, ein Verfahren nach einem der vorangehenden Ansprüche 1 bis 10 zur Bestimmung eines Ausrichtungsvektors des optischen Feineinstellungsfehlers des Bilderfassungsgerätes zu realisieren.

19. Verfahren zum Zusammenbau nach Anspruch 18, wobei die Einstellung der Höhe jedes Sensors (1, 2) durch Anbringung von mindestens einem Füllstück zwischen dem Sensor und einer Halterung (10, 10₁, 10₂) des genannten Sensors innerhalb des Gerätes erfolgt.

20. Verfahren zum Zusammenbau nach Anspruch 18 oder 19, wobei die Sensoren (1, 2) in dem Gerät so installiert sind, dass mit der Montage eine Abweichung (Δf) zwischen den jeweiligen mittleren Höhen der Sensoren in den sich überdeckenden Längensegmenten fest eingestellt wird.

21. Verfahren zum Zusammenbau nach einem der vorangehenden Ansprüche 18 bis 20, das darüber hinaus den folgenden vorherigen Schritt umfasst:
- Erzielung eines mittleren Varianzwertes der einzelnen Höhen der Bildpunkterfassungselemente innerhalb jedes Längensegments jedes der Sensoren (1, 2), das sich mit dem des anderen Sensors überdeckt, wobei die Höhen in der Richtung (P) gemessen werden, die senkrecht zu jedem Sensor verläuft,
und wobei die jeweiligen mittleren Höhen der beiden Sensoren (1, 2) in Schritt /6/ in der Weise eingestellt werden, dass die Abweichung (Δf) zwischen den mittleren Höhen in den entsprechenden, sich überdeckenden Längensegmenten größer ist als der Wert der mittleren Varianz aus den einzelnen Höhen der Bildpunkterfassungselemente in jedem Längensegment eines der Sensoren, das sich mit dem des anderen überdeckt.

22. Verfahren zum Zusammenbau nach einem der vorangehenden Ansprüche 18 bis 21, wobei die jeweiligen mittleren Höhen der beiden Sensoren (1, 2) in Schritt /6/ in der Weise eingestellt werden, dass die Abweichung (Δf) zwischen den mittleren Höhen in den entsprechenden, sich überdeckenden Längensegmenten größer ist als 20 µm.

23. Verfahren zum Zusammenbau nach einem der vorangehenden Ansprüche 18 bis 22, wobei die jeweiligen mittleren Höhen der beiden Sensoren (1, 2) in Schritt /6/ in der Weise eingestellt werden, dass die Abweichung (Δf) zwischen den mittleren Höhen in den entsprechenden, sich überdeckenden Längensegmenten kleiner ist als ein Schwellwert des optischen Feineinstellungsfehlers, der einer Verringerung der Auflösung in Abhängigkeit von einer Größe der Bildpunkterfassungselemente der Sensoren entspricht.

24. Verfahren zur Charakterisierung eines optischen Feineinstellungsfehlers eines Bilderfassungsgeräts mit zwei Bilderfassungsgeräten, wobei jedes Gerät gesondert von dem anderen Folgendes umfasst:
- eine Bilderzeugungsoptik, die dazu geeignet ist, ein Bild einer Szenerie in einer Brennebene zu erzeugen,
- einen Bildsensor, der parallel zur Brennebene installiert ist, und eine Anordnung von Bildpunkterfassungselementen umfasst, die sich an den Schnittpunkten von mindestens einer Zeile und Spalten einer Matrix des Sensors befinden, und
- ein System zur optischen Feineinstellung, das dazu geeignet ist, die Brennebene der Bilderzeugungsoptik in Bezug auf den Sensor in einer senkrecht zum Sensor verlaufenden Richtung zu verschieben,
wobei die beiden Geräte in der Weise parallel zueinander angeordnet sind, dass die optischen Eintrittsfelder, die jeweils mit den beiden Sensoren durch die entsprechenden Bilderzeugungsoptiken zusammengeführt werden, eine teilweise Überdeckung in der Szenerie aufweisen, und die beiden Geräte so entlang der entsprechenden optischen Achsen ausgerichtet sind, dass die Zeilen der Bildpunkterfassungselemente der beiden Sensoren parallel zu einer gemeinsamen Richtung in der Szenerie der entsprechenden Längensegmente der beiden Sensoren verlaufen, die jeweils bei Überdeckung der optischen Eintrittsfelder zusammengeführt werden, und als Sensorlängensegmente mit Überdeckung bezeichnet werden,
einer Steuereinheit, die dazu geeignet ist, eine zwischen den beiden Geräten koordinierte Bilderfassung zu steuern, und
wobei das Verfahren folgende Schritte umfasst:
/1/ Erfassung von zwei Bildern ein und desselben Ausschnitts einer Szenerie mit jeweils einem der beiden Geräte in den entsprechenden Längenabschnitten der Geräte mit Überdeckung,
/2/ Gesonderte Berechnung zweier Kontrastwerte für die beiden Bilder ein und desselben Ausschnitts der Szenerie, und
/3/ Ableitung eines Ausrichtungsvektors des optischen Feineinstellungsfehlers entlang der senkrecht zu jedem Sensor verlaufenden Richtung anhand eines Vergleichs der Kontrastwerte, die jeweils für die beiden Bilder des Ausschnitts der Szenerie berechnet werden,
und **dadurch gekennzeichnet, dass**:
die beiden Bilder in Phase /1/ für die entsprechenden Einstellungen erfasst werden, die bei den beiden Feineinstellungssystemen unterschiedlich sind, so dass sich die entsprechenden Brennebenen der beiden Bilderzeugungsoptiken für die Bilder in jeweiligen Defokussierungsabständen der beiden Sensoren befinden, die unterschiedlich sind.

25. Verfahren nach Anspruch 24, wobei die Ausprägungsrichtung des Feineinstellungsfehlers bei einem der beiden Geräte in Bezug auf die Brennebene des Geräts in Phase /3/ von einer Position auf der lichtempfindlichen Oberfläche desjenigen der beiden Sensoren, an der der Kontrastwert am größten ist, zu einer Position auf der lichtempfindlichen Oberfläche des Sensors, an der der Kontrastwert am kleinsten ist, ermittelt wird, wobei die Positionen auf den lichtempfindlichen Oberflächen bei den Längensegmenten mit Überdeckung zwischen den beiden Sensoren ermittelt und danach auf dasjenige der beiden Geräte übertragen werden, bei dem die Ausprägungsrichtung des Feineinstellungsfehlers bestimmt wird.

## Claims

1. Method for characterizing an optical focusing defect of an image capture instrument, wherein the instrument comprises:
- an image formation optical system (11) suitable for forming an image of a scene in at least one focal plane (PF);
- at least two image sensors (1, 2), each of which comprises a set of elements for detecting pixels arranged at intersections of at least one line and columns of a sensor matrix, both sensors being placed parallel to said at least one focal plane (PF) and oriented so that directions of respective lines (DL) of the sensors are identical or optically conjugated by a focal plane duplication system (3), and wherein the two sensors are offset relative to one another parallel to the directions of the lines with a partial overlap (R) of said sensors along the directions of the lines, so that each sensor has a length segment overlapping the other sensor and a complementary segment that does not overlap the other sensor;
- a control unit (21) suitable for controlling an image capture operation coordinated between the two sensors (1, 2); and
- an optical focusing system (12) suitable for shifting said at least one focal plane (PF) of the image formation optical system with respect to the sensors in a direction (P) perpendicular to each sensor;
wherein the method comprises the following steps:
/1/ capturing two images of a same portion of the scene respectively with both of the two sensors (1, 2) in the respective overlapping length segments of said sensors;
/2/ calculating two values of a contrast separately for the two images of the same scene portion; and
/3/ deriving a direction of the optical focusing defect along the direction (P) perpendicular to each sensor, based on a comparison of the contrast values calculated respectively for the two images of the scene portion;
and **characterized in that**:
- the two sensors (1, 2) are mounted within the instrument with respective average heights that are different in the respective overlapping length segments, said heights being measured along the direction (P) perpendicular to each sensor with respect to a shared reference plane (PRef) or reference planes respectively associated with each sensor and conjugated with one another by the focal plane duplication system (3); and
the two images are captured in step /1/ for one and same adjustment of the focusing system (12), so that said at least one focal plane (PF) of the image formation optical system is situated for said images at respective defocusing distances (df₁, df₂) of the two sensors (1, 2) that are different.

2. Method according to claim 1, wherein the direction of the focusing defect, when counted from said at least one focal plane (PF), is determined in step /3/ as originating from a photosensitive surface position of that one among the two sensors (1, 2) with the highest contrast value, toward a photosensitive surface position of the sensor with the lowest contrast value, the positions of the photosensitive surfaces being identified for the length segments which overlap between the two sensors.

3. Method according to claim 1 or 2, wherein a difference (Δf) between the respective average heights of the two sensors (1, 2) in the respective overlapping length segments is greater than an average variation of individual levels of the pixel detection elements in each length segment of one of the sensors that overlaps the other sensor, said levels being measured along the direction (P) perpendicular to each sensor.

4. Method according to any of the preceding claims, wherein the difference (Δf) between the respective average heights of the two sensors (1, 2) in the respective overlapping length segments is greater than 20 µm.

5. Method according to any of the preceding claims, wherein the difference (Δf) between the respective average heights of the two sensors (1, 2) in the respective overlapping length segments is less than a threshold value for the optical focusing defect, which corresponds to a degradation of the resolution of a captured image.

6. Method according to any of the preceding claims, wherein the two sensors (1, 2) each has a single line of pixel detection elements, counted along a direction of columns (DC) of the sensor, or each of the two sensors is of time delay integration type.

7. Method according to any of the preceding claims, wherein a complete image is captured in step /1/ by also using the non-overlapping complementary segments of the sensors (1, 2), said complete image including the two images of the scene portion captured redundantly by the overlapping length segments of the sensors.

8. Method according to any of the preceding claims, wherein the two sensors (1, 2) are also offset to one another parallel to a column direction (DC) of each sensor and
the control unit (21) is suitable for controlling the execution of step /1/ so that the two images are captured respectively by both sensors (1, 2) with a delay between said two images corresponding to a displacement of the scene portion in said at least one focal plane (PF) from one of the two sensors to the other sensor along the column direction.

9. Method according to any of the preceding claims, also comprising the following step, carried out after step /3/:
/4/ activating the optical focusing system (12) to displace said at least one focal plane (PF) of the image formation optics in the direction opposite that of the focusing defect.

10. Method according to any of the preceding claims, wherein step /3/ also comprises a calculation by extrapolation of a coarse adjustment of the focusing system (12) to move said at least one focal plane (PF) closer to an average position of the sensors (1, 2) along the direction (P) perpendicular to each sensor, the coarse adjustment being extrapolated from the contrast values calculated respectively for the two images of the scene portion.

11. Image capture instrument comprising:
- an image formation optical system (11) suitable for forming an image of a scene in at least one focal plane (PF);
- at least two image sensors (1, 2), each of which comprises a set of elements for detecting pixels arranged at intersections of at least one line and columns of a sensor matrix, both sensors being placed parallel to said at least one focal plane (PF) and oriented so that respective line directions (DL) of said sensors are identical or optically conjugated by a focal plane duplication system (3), wherein the two sensors are offset to one another parallel to the directions of the lines with a partial overlap (R) of said sensors along the directions of the lines, so that each sensor has a length segment overlapping the other sensor and a complementary segment that does not overlap the other sensor;
- a control unit (21) suitable for controlling an image capture operation coordinated between the two sensors (1, 2);
- an optical focusing system (12) suitable for shifting said at least one focal plane (PF) of the image formation optics with respect to the sensors along a direction (P) perpendicular to each sensor; and
- an optical focus controller (22) suitable for controlling execution of the following steps:
/1/ in cooperation with the control unit (21), capturing two images of the same portion of a scene respectively with both of the two sensors (1, 2) in the respective overlapping length segments of said sensors;
/2/ calculating two values of a contrast separately for the two images of the same scene portion; and
/3/ deriving a direction of the optical focusing defect along the direction (P) perpendicular to each sensor, based on a comparison of the contrast values obtained respectively for the two images of the scene portion;
the instrument being **characterized in that**:
- the two sensors (1, 2) are mounted within the instrument with respective average heights that are different in the respective overlapping length segments, said heights being measured along the direction (P) perpendicular to each sensor with respect to a shared reference plane (PRef) or reference planes respectively associated with each sensor and conjugated with one another by the focal plane duplication system (3); and
the focus controller (22) is suitable for controlling, in step /1/, the capture of the two images for a same adjustment of the focusing system (12), so that said at least one focal plane (PF) of the image formation optical system is situated for said images at respective defocusing distances (df₁, df₂) of the two sensors (1, 2) that are different.

12. Instrument according to claim 11, wherein the optical focus controller (22) is suitable for determining, in step /3/, the direction of the focusing defect when it is counted from said at least one focal plane (PF), as originating from a photosensitive surface position of that of the two sensors (1, 2) with the highest contrast value, toward a photosensitive surface position of the sensor with the lowest contrast value, the positions of the photosensitive surfaces being identified for the overlapping length segments between the two sensors.

13. Instrument according to claim 11 or 12, wherein a difference (Δf) between the respective average heights of the two sensors (1, 2) in the respective overlapping length segments is greater than an average variation of individual levels of pixel detection elements in each length segment of one of the sensors that overlaps the other sensor, said levels being measured along the direction (P) perpendicular to each sensor.

14. Instrument according to any of claims 11 to 13, wherein the difference (Δf) between the respective average heights of the two sensors (1, 2) in the respective overlapping length segments is greater than 20 µm.

15. Instrument according to any of claims 11 to 14, wherein the difference (Δf) between the respective average heights of the two sensors (1, 2) in the respective overlapping length segments is less than a threshold value for the optical focusing defect, which corresponds to a loss of resolution associated with a size of pixel detection elements of the sensors.

16. Instrument according to any of claims 11 to 15, wherein the difference between the respective average heights of the two sensors (1, 2) in the respective overlapping length segments is greater than a difference between the respective average heights of said sensors in the complementary non-overlapping segments.

17. Instrument according to any of claims 11 to 16, wherein the two sensors (1, 2) are also offset to one another parallel to a column direction (DC) of each sensor, and
the control unit (21) is suitable for controlling the execution of step /1/ so that the two images are captured respectively by both sensors (1, 2) with a delay between said two images corresponding to a displacement of the scene portion in said at least one focal plane (PF) from one of the two sensors to the other sensor along the column direction.

18. Method of assembling an image capture instrument, comprising the following steps:
/1/ providing an image formation optical system (11) suitable for forming an image of a scene in at least one focal plane (PF);
/2/ placing at least two image sensors (1, 2) parallel to said at least one focal plane (PF), each sensor comprising a set of elements for detecting pixels arranged at intersections of at least one line and columns of a matrix of said sensor, wherein both sensors are oriented so that respective line directions (DL) of said sensors are identical or optically conjugated by a focal plane duplication system (3), and wherein the two sensors are offset to one another parallel to the directions of the lines with a partial overlap (R) of said sensors along the directions of the lines, so that each sensor has a length segment overlapping the other sensor and a complementary segment that does not overlap the other sensor;
/3/ supplying a control unit (21) suitable for controlling an image capture operation coordinated between the two sensors (1, 2);
/4/ supplying an optical focusing system (12) suitable for shifting said at least one focal plane (PF) of the image formation optics with respect to the sensors in a direction (P) perpendicular to each sensor; and
/5/ supplying an optical focus controller (22);
**characterized in that** the assembly method also comprises the following step:
/6/ adjusting the respective average heights of the two sensors (1, 2) within the instrument so that said average heights are different between the two sensors in the respective length segments that overlap, wherein said heights are measured along the direction (P) perpendicular to each sensor with respect to a shared reference plane (PRef) or reference planes respectively associated with each sensor and conjugated with one another by the focal plane duplication system (3);
and **in that** the controller (22) is suitable for carrying out a method according to any of claims 1 to 10 for characterizing an optical focusing defect direction of the image capture instrument.

19. Assembly method according to claim 18, wherein the height of each sensor (1, 2) is adjusted by arranging at least one spacer between the sensor and a support (10, 10₁, 10₂) of said sensor within the instrument.

20. Assembly method according to claim 18 or 19, wherein the sensors (1, 2) are mounted within the instrument so that a difference (Δf) is definitively established due to the assembly, between the respective average heights of said sensors in the overlapping length segments.

21. Assembly method according to any of claims 18 to 20, also comprising the following preliminary step:
- obtaining a value of average variation of the individual levels of the pixel detection elements within each length segment of one of the sensors (1, 2) that overlaps the other sensor, wherein said levels are measured along the direction (P) perpendicular to each sensor;
and wherein the respective average heights of the two sensors (1, 2) are adjusted in step /6/ so that a difference (Δf) between said average heights in the respective overlapping length segments is greater than the value of the average variation of the individual levels of the pixel detection elements within each length segment of one of the sensors that overlaps the other sensor.

22. Assembly method according to any of claims 18 to 21, wherein the respective average heights of the two sensors (1, 2) are adjusted in step /6/ so that the difference (Δf) between said average heights in the respective overlapping length segments is greater than 20 µm.

23. Assembly method according to any of claims 18 to 22, wherein the respective average heights of the two sensors (1, 2) are adjusted in step /6/ so that the difference (Δf) between the respective average heights of the two sensors (1, 2) in the respective overlapping length segments is less than a threshold value of the optical focusing defect, which corresponds to a loss of resolution associated with a size of pixel detection elements of the sensors.

24. Method for characterizing an optical focusing defect of one image capture instrument among two image capture instruments, wherein each instrument comprises, separately from the other instrument:
- an image formation optical system suitable for forming an image of a scene in a focal plane;
- an image sensor placed parallel to a focal plane and comprising an assembly of pixel detection elements arranged at the intersections of at least one line and columns of a sensor matrix; and
- an optical focusing system suitable for moving the focal plane of the image formation optical system with respect to the sensor along a direction perpendicular to the sensor;
wherein the two instruments are arranged in parallel so that the entrance optical fields respectively conjugated with the two sensors by the respective image formation optical systems, exhibit a partial overlap in the scene, and wherein the two instruments are oriented around respective optical axes so that lines of pixel detection elements of the two sensors are parallel to a shared direction in the scene, respective length segments of the two sensors, each of which is conjugated with the overlap of the entrance optical fields, being denoted as overlapping length segments of the sensors;
wherein a control unit is suitable for controlling an image capture operation coordinated between the two instruments; and
wherein the method comprises the following steps:
/1/ capturing two images of a same portion of a scene respectively with both of two instruments in the respective overlapping length segments of the sensors;
/2/ calculating two values of a contrast separately for the two images of the same scene portion; and
/3/ deriving a direction of the focusing defect along the direction perpendicular to each sensor based on a comparison of the contrast values calculated respectively for the two images of the scene portion;
and **characterized in that**:
the two images are captured in step /1/ for respective adjustments that are different for the two focusing systems so that the respective focal planes of the two image formation optical systems are situated, for said images, at different respective defocusing distances of the two sensors.

25. Method according to claim 24, wherein the direction of the focusing defect for one of the two instruments, when it is counted from the focal plane (PF) of said instrument, is determined in step /3/ as originating from a photosensitive surface position of that of the two sensors (1, 2) with the highest contrast value, toward a photosensitive surface position of the sensor with the lowest contrast value, the positions of the photosensitive surfaces being identified for the overlapping length segments between the two sensors and reported to that of the two instruments for which the focusing defect direction has been determined.
